(19) Europäisches Patentamt
European Patent Office
Office européen des brevets

(11) **EP 3 375 695 B1**

(12) **EUROPEAN PATENT SPECIFICATION**

(45) Date of publication and mention
of the grant of the patent:
**11.12.2019 Bulletin 2019/50**

(51) Int Cl.:
*B62D 6/00* *(2006.01)*          *H02P 29/00* *(2016.01)*
*B62D 101/00* *(2006.01)*        *B62D 119/00* *(2006.01)*
*B62D 137/00* *(2006.01)*

(21) Application number: **17766838.1**

(22) Date of filing: **17.03.2017**

(86) International application number:
**PCT/JP2017/010876**

(87) International publication number:
**WO 2017/159843 (21.09.2017 Gazette 2017/38)**

(54) **CONTROL DEVICE FOR ELECTRIC POWER STEERING APPARATUS**

STEUERUNGSVORRICHTUNG FÜR EINE ELEKTRISCHE SERVOLENKUNG

DISPOSITIF DE COMMANDE POUR DISPOSITIF DE DIRECTION ASSISTÉE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2016 JP 2016055674**

(43) Date of publication of application:
**19.09.2018 Bulletin 2018/38**

(73) Proprietor: **NSK Ltd.**
**Tokyo 141-8560 (JP)**

(72) Inventors:
• **SAKAGUCHI, Toru**
  **Maebashi-Shi**
  **Gunma 371-8527 (JP)**
• **ONOE, Toshikazu**
  **Maebashi-Shi**
  **Gunma 371-8527 (JP)**

(74) Representative: **Luten, Martin Haaije et al**
**Arnold & Siedsma**
**Bezuidenhoutseweg 57**
**2594 AC The Hague (NL)**

(56) References cited:
**WO-A1-2013/061568     WO-A1-2016/104568**
**WO-A2-2014/195625**

**Description**

Technical Field

The present invention relates to a control unit of an electric power steering apparatus that assists and controls a steering system of a vehicle by driving a motor on the basis of a current command value, in particular to a control unit of an electric power steering apparatus that sets a viscoelastic model as a reference model, and suppresses tendency of pulling a steering wheel to steering ends by making a virtual reaction force in steering.

Background Art

An electric power steering apparatus (EPS) which provides a steering system of a vehicle with an assist torque by means of a rotational torque of a motor, applies a driving force of the motor as the assist torque to a steering shaft or a rack shaft by means of a transmission mechanism such as gears or a belt through a reduction mechanism. In order to accurately generate the assist torque, such a conventional electric power steering apparatus performs a feedback control of a motor current. The feedback control adjusts a voltage supplied to the motor so that a difference between a current command value and a detected motor current value becomes small, and the adjustment of the voltage supplied to the motor is generally performed by an adjustment of a duty ratio of a pulse width modulation (PWM) control.

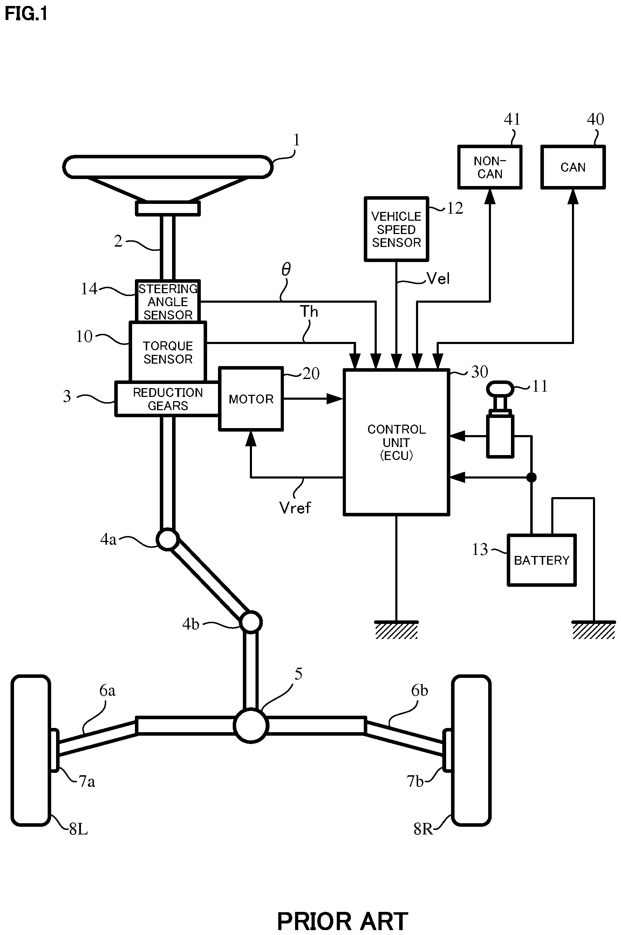

A general configuration of the conventional electric power steering apparatus will be described with reference to FIG. 1. As shown in FIG. 1, a column shaft (a steering shaft or a handle shaft) 2 connected to a steering wheel 1 is connected to steered wheels 8L and 8R through reduction gears 3, universal joints 4a and 4b, a rack-and-pinion mechanism 5, and tie rods 6a and 6b, further via hub units 7a and 7b. In addition, the column shaft 2 is provided with a torque sensor 10 for detecting a steering torque of the steering wheel 1, and a motor 20 for assisting a steering force of the steering wheel 1 is connected to the column shaft 2 through the reduction gears 3. The electric power is supplied to a control unit (ECU) 30 for controlling the electric power steering apparatus from a battery 13, and an ignition key signal is inputted into the control unit 30 through an ignition key 11. The control unit 30 calculates a current command value of an assist command by using an assist map on the basis of a steering torque Th detected by the torque sensor 10 and a vehicle speed Vel detected by a vehicle speed sensor 12, and controls a current supplied to the motor 20 by means of a voltage control value Vref obtained by performing compensation or the like to the calculated current command value.

A controller area network (CAN) 40 exchanging various information of a vehicle is connected to the control unit 30, and it is possible to receive the vehicle speed Vel from the CAN. Further, it is also possible to connect a non-CAN 41 exchanging a communication, analog/digital signals, a radio wave or the like except with the CAN 40 to the control unit 30.

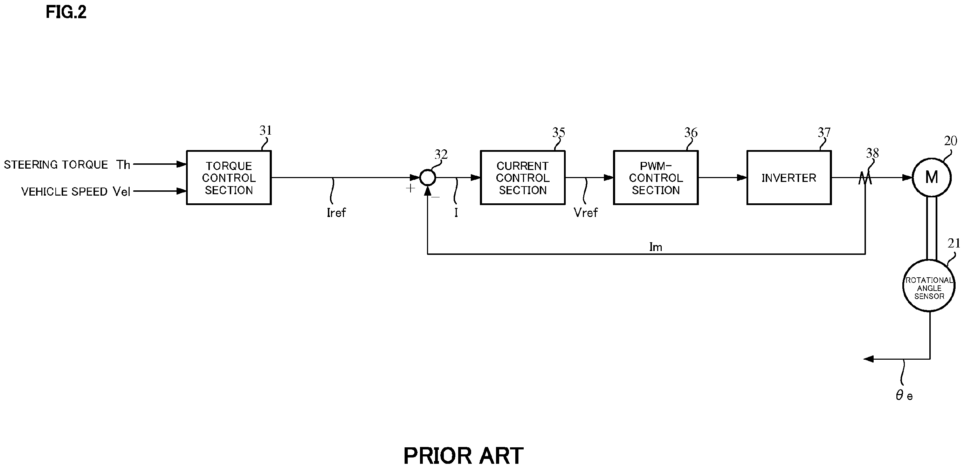

In such an electric power steering apparatus, the control unit 30 mainly comprises a CPU (including an MPU and an MCU), and general functions performed by programs within the CPU are, for example, shown in FIG. 2.

Functions and operations of the control unit 30 will be described with reference to FIG. 2. The steering torque Th from the torque sensor 10 and the vehicle speed Vel from the vehicle speed sensor 12 are inputted into a torque control section 31 to calculate a current command value, and a calculated current command value Iref is inputted into a subtracting section 32, where a detected motor current value Im is subtracted from the current command value Iref. A deviation I (= Iref - Im) which is the subtraction result at the subtracting section 32 is controlled at the current control section 35 performing a proportional-integral (PI) control and so on. The voltage control value Vref obtained by the current control is inputted into a PWM-control section 36 which calculates the duty ratio, and PWM-drives the motor 20 through an inverter 37 by means of a PWM signal. The motor current value Im of the motor 20 is detected by a motor current detector 38, and is inputted and fed back to the subtracting section 32. Further, a rotational angle sensor 21 such as a resolver is connected to the motor 20 and a rotational angle θe is detected and outputted.

Some vehicles which such an electric power steering apparatus provides with the assist torque have a suspension whose characteristic is that a self-aligningtorque (SAT) being a reaction force decreases as a steering angle increases in backward traveling, and the SAT decreases as the steering angle increases also in forward traveling. In such a characteristic, tendency of pulling a steering wheel to a rack end (a maximum steering angle in a steering system) occurs, and a driver can feel handling of the vehicle uncomfortable. To cope with this, the tendency of pulling a steering wheel to steering ends (pulling-tendency) is suppressed by providing the steering system with an appropriate reaction force, and it is also possible to return a steering wheel in a direction to a neutral position. From the viewpoint of providing the appropriate reaction force, some techniques have been proposed.

A power steering apparatus disclosed in a publication of Japanese Patent No. 4747958 B2 (Patent Document 1) increases a return correction amount (a return torque) when a turning angle is in the vicinity of the maximum turning angle in order to improve deterioration of a return characteristic caused by decrease in the SAT by degradation in an achievement ratio of Ackerman steering in the vicinity of a lock (end) position. Further, the power steering apparatus improves also the return characteristic in braking a vehicle by increasing the return correction amount in braking the vehicle more than in not braking the vehicle.

A power steering apparatus disclosed in Japanese Unexamined Patent Publication No. H6-144262 A (Patent Document 2) performs an adjustment to lower an assist torque in a turning direction and raise an assist torque in a return direction when detecting a vehicle traveling backward in order to improve steering stability and steering feeling in backward traveling and to enhance returnability of a steering wheel in backward traveling.

In order to provide a steering wheel with an appropriate steering reaction force depending on a traveling condition even if a vehicle travels on a slippery road surface or the like, an electric power steering apparatus disclosed in a publication of Japanese Patent No. 4293734 B2 (Patent Document 3) decreases a superimposed reaction torque when a reaction torque of a steering system or a reaction torque of a road surface is large, and increases the superimposed reaction torque when the reaction torque of a steering system or the reaction torque of a road surface is small.

A steering apparatus of a vehicle disclosed in a publication of Japanese Patent No. 4400544 B2 (Patent Document 4) decreases a return torque as an absolute value of a steering torque is increased in order to prevent a large return torque from acting when beginning to turn a steering wheel and improve steering feeling. In addition to that, the steering apparatus increases the return torque as a steering angle is increased.

An electric power steering apparatus disclosed in a publication of Japanese Patent No. 4997472 B2 (Patent Document 5) performs an appropriate steering return compensation control (steering wheel return compensation control) even in such a case where a SAT decreases as a case where a vehicle travels on a low $\mu$ road such as a frozen road. In order to achieve good steering returnability regardless of a condition of a traveling road surface, the larger an absolute value of a steering angle is, the stronger the electric power steering apparatus makes a basic control amount which rotates a steering in a direction to a neutral position, and the electric power steering apparatus assigns a steering return compensation component to a control amount corresponding to an integration value of the basic control amount or an integration value of the steering angle. Thus, even in the case that a remaining steering angle occurs in the steering angle, the integration value is increased, the larger steering return compensation component is calculated, and the electric power steering apparatus can ensure the good steering returnability even on the low $\mu$ road or the like. Further, the electric power steering apparatus returns a steering position to the neutral position quickly by clearing the integration value in the vicinity of the neutral position.

The List of Prior Art Documents

Patent Documents

Patent Document 1: Japanese Patent No.4747958 B2
Patent Document 2: Japanese Unexamined Patent Publication No. H6-144262 A
Patent Document 3: Japanese Patent No.4293734 B2
Patent Document 4: Japanese Patent No.4400544 B2
Patent Document 5: Japanese Patent No.4997472 B2

Summary of the Invention

Problems to be Solved by the Invention

In Patent Documents 1 to 5, the apparatuses use a predetermined map (or table) to obtain a reaction force (torque).

The apparatus disclosed in Patent Document 1 uses a two-dimensional map defining a relationship between the turning angle and a fundamental return torque in braking or holding a vehicle . The apparatus disclosed in Patent Document 2 uses a map defining a relationship between a steering torque and a fundamental turning assist amount and a coefficient corresponding to a vehicle speed in a turning direction, and uses a map defining a relationship between a steering angle and a fundamental returning assist amount and the coefficient corresponding to a vehicle speed in a returning direction. The apparatus disclosed in Patent Document 3 uses a map defining a relationship between a steering shaft reaction torque (a reaction force of a steering system) or a road surface reaction torque and a gain (a steering angle F/B gain). The apparatus disclosed in Patent Document 4 uses a table storing a standard return torque determined depending on a steering angle and a table storing a return torque determined depending on a steering torque. In Patent Document 4, though there is a description that it is possible to use a predefined function instead of the table, a specific function is not disclosed. The apparatus disclosed in Patent Document 5 uses a map correlating the steering angle and the basic control amount.

However, each Patent Document does not disclose a specific method to make the map, in general, the map is made in accordance with a conjecture from a lot of data, trial and error, a rule of thumb, and so on, so that it is not easy to make, and there is a possibility of not coping flexibly with changes of a usage environment and a condition, in particular an unexpected change.

The present invention has been developed in view of the above-described circumstances, and it is an object of the present invention is to provide a control unit of an electric power steering apparatus that configures a control system on the basis of a physical model of a rack (steering rack) mechanism, configures a model following control where an output of a controlled object follows an output of a reference model, makes a driver feel an appropriate reaction force, and suppresses uncomfortable feeling to the driver by pulling-tendency.

Additionally, the document WO2014/195625A2 discloses the preambles of the independent claims.

Means for Solving the Problems

The present invention relates to a control unit of an electric power steering apparatus that assists and controls a steering system by driving a motor based on a current command value, the above-described object of the present invention is achieved by that comprising: a configuration of a model following control setting a viscoelastic model for a rack displacement as a reference model; wherein the control unit performs a feedback control that inputs a shaft force corresponding to a road surface reaction force, and generates a virtual reaction force, by the configuration of the model following control.

Further, the above-described object of the present invention is achieved by that comprising: a rack position converting section that converts a rotational angle of the motor into a judgment rack position; a rack position judging section that judges that the judgment rack position exceeds a predetermined first rack position, and outputs a rack displacement and a switching signal; a viscoelastic model following control section that generates a virtual shaft force by setting a viscoelastic model as a reference model based on a shaft force corresponding to a road surface reaction force, the rack displacement and the switching signal; and a command value converting section that converts the virtual shaft force into a control command value; wherein the viscoelastic model following control section comprises a feedback control section that outputs the virtual shaft force in accordance with a feedback control based on the shaft force and the rack displacement, and a switching section that switches an output of the virtual shaft force in accordance with the switching signal; and wherein the control unit performs the assist and control in accordance with a compensation current command value which is calculated by adding the control command value to the current command value.

Furthermore, the above-described object of the present invention is more effectively achieved by that wherein the control unit further comprises a first shaft force converting section that converts a steering torque into a steering shaft force, and a second shaft force converting section that converts the compensation current command value into an assist shaft force, and wherein the control unit obtains the shaft force by adding the steering shaft force and the assist shaft force; or wherein the control unit further comprises a resistance force calculating section that obtains a resistance force which operates on a mechanical section of the electric power steering apparatus, and wherein the control unit obtains the shaft force by subtracting the resistance force in adding the steering shaft force and the assist shaft force; or wherein the control unit changes a control parameter of the feedback control section in accordance with the rack displacement or a virtual rack displacement; or wherein the control parameter is set small where the rack displacement or the virtual rack displacement is small, and the control parameter is increased as the rack displacement or the virtual rack displacement is increased; or wherein the control unit further comprises a first limiting section that limits the virtual shaft force when the rack displacement exceeds a predetermined second rack position which is larger than the first rack position and smaller than a rack end position; or wherein the control unit further comprises a second limiting section that sets an upper limit and a lower limit on the virtual shaft force and limits the virtual shaft force; or wherein the upper limit and the lower limit are set depending on a steering direction; or wherein the upper limit and the lower limit are set based on the shaft force; or wherein the upper limit and the lower limit are changed in accordance with a steering velocity; or wherein the upper limit and the lower limit are changed in accordance with a vehicle speed; or wherein the control unit changes a model parameter of the feedback control section in accordance with the rack displacement; or wherein the control unit stores the shaft force at a time point when the judgment rack position exceeds the first rack position as an initial shaft force, and uses a difference between the shaft force and the initial shaft force as the shaft force after the time point.

Effects of the Invention

Since the control unit of the electric power steering apparatus according to the present invention configures a control system on the basis of a physical model of a rack mechanism, it is easy to see daylight for a constant design. Since the control unit configures the model following control where an output of a controlled object follows an output of the reference model, the present invention has an advantage effect that a robust (tough) suppressing-control of pulling-tendency becomes possible against variations of a load state (an external disturbance) and the controlled object.

Brief Description of the Drawings

In the accompanying drawings:

FIG. 1 is a configuration diagram illustrating a general outline of an electric power steering apparatus;
FIG. 2 is a block diagram showing a general configuration example of a control system of the electric power steering apparatus;
FIG. 3 is a block diagram showing a configuration example (a first embodiment) of the present invention;
FIG. 4 is a diagram showing a characteristic example of a rack position converting section;
FIG. 5 is a block diagram showing a configuration example (the first embodiment) of a viscoelastic model following control section;
FIG. 6 is a schematic diagram of a viscoelastic model;
FIG. 7 is a block diagram showing detailed principle of the viscoelastic model following control section;
FIG. 8 is a block diagram showing a detailed configuration example (the first embodiment) of the viscoelastic model following control section;
FIGs. 9A and 9B are diagrams showing states of a virtual rack position and a rack reaction force changing by occurrence of a virtual rack displacement and a virtual reaction force, FIG. 9A is a diagram showing the state of the changing virtual rack position, FIG. 9B is a diagram showing the state of the changing rack reaction force;
FIG. 10 is a flowchart showing an operating example (the first embodiment) of the present invention;
FIG. 11 is a flowchart showing an operating example (the first embodiment) of a viscoelastic model following control;
FIG. 12 is a block diagram showing a detailed configuration example (a second embodiment) of the viscoelastic model following control section;
FIG. 13 is a diagram showing an example of changing control parameters in accordance with the rack displacement;
FIG. 14 is a flowchart showing an operating example (the second embodiment) of the viscoelastic model following control;
FIG. 15 is a block diagram showing a detailed configuration example (a third embodiment) of the viscoelastic model following control section;
FIG. 16 is a flowchart showing an operating example (the third embodiment) of the viscoelastic model following control;
FIG. 17 is a block diagram showing a configuration example (a fourth embodiment) of the present invention;
FIG. 18 is a block diagram showing a configuration example (the fourth embodiment) of a first limiting section;
FIG. 19 is a flowchart showing an operating example (the fourth embodiment) of the viscoelastic model following control;
FIG. 20 is a flowchart showing an operating example (the fourth embodiment) of the first limiting section;
FIG. 21 is a block diagram showing a configuration example (a fifth embodiment) of the present invention;
FIG. 22 is a flowchart showing an operating example (the fifth embodiment) of the present invention;
FIG. 23 is a flowchart showing an operating example (the fifth embodiment) of the viscoelastic model following control;
FIG. 24 is a flowchart showing an operating example (the fifth embodiment) of a second limiting section;
FIG. 25 is a block diagram showing a configuration example (a sixth embodiment) of the present invention;
FIG. 26 is a diagram showing an example of changing limit values of the fifth embodiment;
FIG. 27 is a diagram showing an example of changing limit values of the sixth embodiment;
FIG. 28 is a flowchart showing an operating example (the sixth embodiment) of the second limiting section;
FIG. 29 is a diagram showing an example of changing limit values of a seventh embodiment;
FIG. 30 is a diagram showing an example of changing limit values of an eighth embodiment;
FIG. 31 is a block diagram showing a configuration example (a ninth embodiment) of the present invention;
FIG. 32 is a block diagram showing a configuration example (the ninth embodiment) of the second limiting section;
FIG. 33 is a diagram showing a characteristic example of a high steering velocity gain to a steering velocity;
FIG. 34 is a diagram showing a characteristic example of a low steering velocity gain to the steering velocity;
FIG. 35 is a flowchart showing an operating example (the ninth embodiment) of the second limiting section;
FIG. 36 is a block diagram showing a configuration example (a tenth embodiment) of the present invention;
FIG. 37 is a block diagram showing a configuration example (the tenth embodiment) of the second limiting section;
FIG. 38 is a diagram showing a characteristic example of a high vehicle speed gain to a vehicle speed;
FIG. 39 is a diagram showing a characteristic example of a low vehicle speed gain to the vehicle speed;
FIG. 40 is a flowchart showing an operating example (the tenth embodiment) of the second limiting section;
FIG. 41 is a block diagram showing a configuration example (an eleventh embodiment) of the present invention;
FIG. 42 is a block diagram showing a configuration example (the eleventh embodiment) of a resistance force calculating section;

FIG. 43 is a flowchart showing an operating example (the eleventh embodiment) of the viscoelastic model following control;

FIG. 44 is a flowchart showing an operating example (the eleventh embodiment) of the resistance force calculating section;

FIG. 45 is a block diagram showing a detailed configuration example (a twelfth embodiment) of the viscoelastic model following control section;

FIG. 46 is a diagram showing an example of changing model parameters in accordance with the rack displacement;

FIG. 47 is a flowchart showing an operating example (the twelfth embodiment) of the viscoelastic model following control;

FIG. 48 is a block diagram showing a configuration example (a thirteenth embodiment) of the present invention; and

FIG. 49 is a flowchart showing an operating example (the thirteenth embodiment) of the viscoelastic model following control.

Mode for Carrying Out the Invention

A control unit of an electric power steering apparatus according to the present invention configures a control system on the basis of a physical model of a rack (steering rack) mechanism, sets a viscoelastic model (a spring constant and a viscous friction coefficient) as a reference model, configures a model following control where an output (a rack position) of a controlled object follows an output of the reference model, makes a driver feel an appropriate reaction force, and suppresses uncomfortable feeling to the driver by tendency of pulling a steering wheel to steering ends (pulling-tendency).

The model following control comprises a viscoelastic model following control section. The viscoelastic model following control section comprises a feedback control section. The viscoelastic model following control section generates a virtual reaction force by a feedback control inputting a force corresponding to a road surface reaction force, suppresses the pulling-tendency, and enables also a steering wheel to return in a direction to a neutral position. The viscoelastic model following control section uses a shaft force such as a rack shaft force and a column shaft torque which are applied to a rack shaft, a column shaft, and so on where the road surface force is transmitted, as the force corresponding to the road surface reaction force.

Hereinafter, embodiments of the present invention will be described with reference to the accompanying drawings. Though the following embodiments use the rack shaft force as the shaft force, it is possible to use the column shaft torque because the rack shaft force is equivalent to the column shaft torque. The rack shaft force is calculated by means of a steering torque and a compensation current command value. The compensation current command value is a value (data) obtained by compensating a current command value on the basis of a virtual shaft force generated by the viscoelastic model following control section, and an assist control of a steering system is performed on the basis of the compensation current command value.

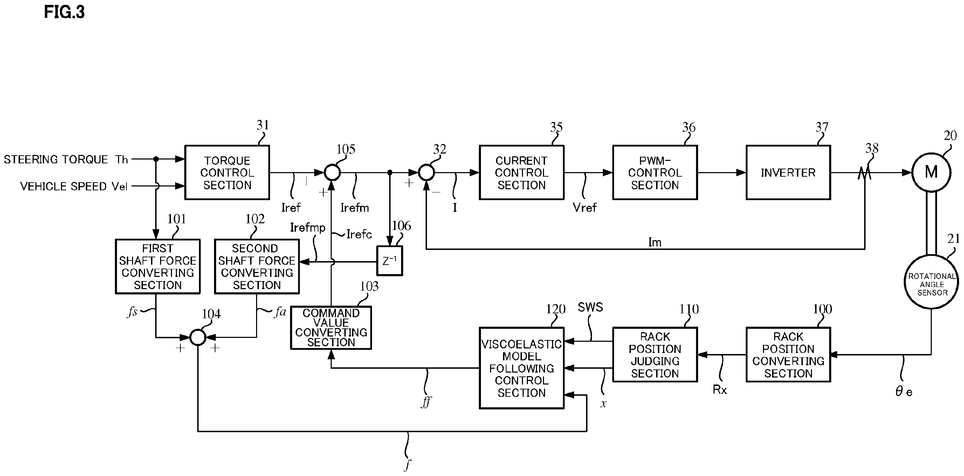

FIG. 3 shows a configuration example (a first embodiment) of the embodiment of the present invention corresponding to FIG. 2, the same configurations are designated with the same numerals of FIG. 2, and the explanation is omitted.

A steering torque Th is inputted into a torque control section 31, and is also inputted into a first shaft force converting section 101.

The first shaft force converting section 101 calculates a steering shaft force fs for calculating a rack shaft force f by converting the steering torque Th in accordance with the following expression 1.

[Expression 1]

$$fs = Th \times \frac{2\pi}{Cf}$$

Here, Cf is a stroke ratio (a rack-and-pinion stroke ratio) [m/rev.] which is a movement amount of the rack shaft in the case that a steering wheel goes around once.

A compensation current command value (a previous compensation current command value Irefmp) which is one sample before and is stored in a storing section ($Z^{-1}$) 106, is used to calculate the rack shaft force f. Since a virtual shaft force ff underlying calculation of the compensation current command value is calculated at a viscoelastic model following control section 120 by using the rack shaft force f, the previous compensation current command value Irefmp being the compensation current command value which is one sample before, is used in order to calculate the rack shaft force f. The previous compensation current command value Irefmp is converted into an assist shaft force fa at a second shaft force converting section 102 in accordance with the following expression 2.

$$[\text{Expression 2}]$$
$$fa = G1 \times Irefmp$$

$$G1 = Kt \times Gr \times \frac{2\pi}{Cf}$$

Here, Kt is a torque constant [Nm/A], and Gr is a reduction ratio.

The rack shaft force f is calculated by adding the steering shaft force fs and the assist shaft force fa at an adding section 104, and is inputted into the viscoelastic model following control section 120.

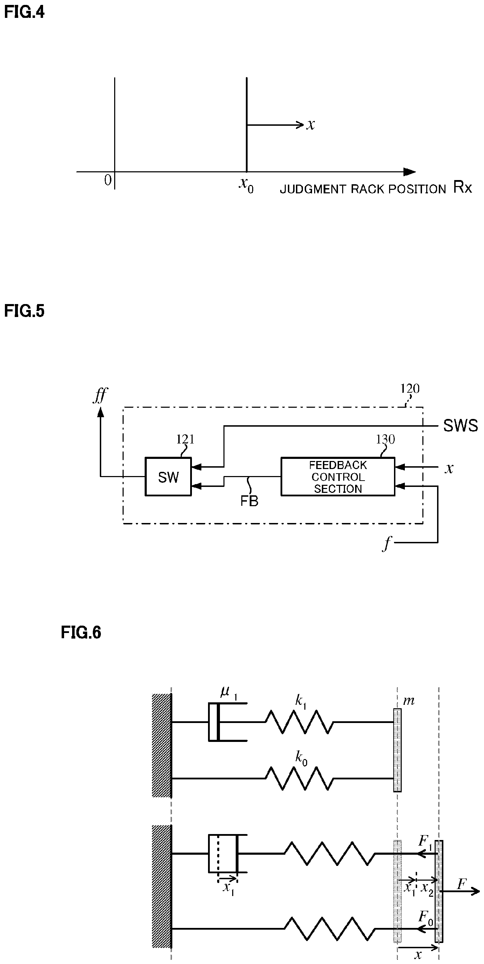

A rotational angle θe from a rotational angle sensor 21 is inputted into a rack position converting section 100, and is converted into a judgment rack position Rx. The judgment rack position Rx is inputted into a rack position judging section 110. As shown in FIG. 4, when the judgment rack position Rx exceeds a predetermined position (a first rack position) $x_0$ which is set in front of a rack end, the rack position judging section 110 outputs a switching signal SWS to perform the model following control, and outputs a distance from the first rack position $x_0$ as a rack displacement x. When the judgment rack position Rx does not exceed the first rack position $x_0$, the rack position judging section 110 outputs nothing, and an ordinary assist control is performed. The switching signal SWS and the rack displacement x are inputted into the viscoelastic model following control section 120 with the rack shaft force f. The virtual shaft force ff obtained by performing control calculation at the viscoelastic model following control section 120 is converted into a control command value Irefc at a command value converting section 103 in accordance with the following expression 3.

$$[\text{Expression 3}]$$
$$Irefc = \frac{ff}{G1}$$

The control command value Irefc is added to a current command value Iref at an adding section 105 in order to compensate the current command value Iref, and the addition result becomes a compensation current command value Irefm. The assist control is performed on the basis of the compensation current command value Irefm.

Moreover, the first rack position $x_0$ shown in FIG. 4 may be set at an appropriate position, and may be set to different values when a vehicle travels forward and when the vehicle travels backward. Further, though the rotational angle θe is acquired from the rotational angle sensor 21 connected to a motor, it may be acquired from a steering angle sensor.

A configuration example of the viscoelastic model following control section 120 is shown in FIG. 5.

As shown in FIG. 5, the rack displacement x and the rack shaft force f are inputted into a feedback control section 130. A virtual shaft force FB from the feedback control section 130 is inputted into a switching section 121. The switching section 121 is turned on or off in accordance with the switching signal SWS. When the switching section 121 is turned off in accordance with the switching signal SWS, an output from the switching section 121 is zero. When the switching section 121 is turned on in accordance with the switching signal SWS, the virtual shaft force FB is outputted as the virtual shaft force ff. The virtual shaft force ff is converted into the control command value Irefc at the command value converting section 103.

The viscoelastic model following control section 120 according to the present invention is the control system based on the physical model of the rack mechanism, and configures the model following control which sets the viscoelastic model (a spring constant $k_0$ [N/m] and a viscous friction coefficient $\mu$ [N/(m/s)]) as the reference model (an input is a force, and an output is a physical model described in a displacement) in a range from the first rack position to the rack end (hereinafter referred to a "control range").

FIG. 6 shows a schematic diagram in the control range, and a relationship between mass m and forces $F_0$ and $F_1$ is represented by the following expression 4. The derivation of the expressions of the viscoelastic model is described in, for example, "Elementary Mechanics for Elastic Membrane and Viscoelasticity" (Kenkichi OHBA) of "Engineering Sciences & Technology", Kansai University, official journal of a scientific society, Vol.17 (2010).

[Expression 4]

$$F = m\ddot{x} + F_0 + F_1$$

Assuming that spring constants $k_0$ and $k_1$ are defined for the rack displacements $x_1$ and $x_2$, respectively, the following expressions 5 to 7 are established.

[Expression 5]

$$x = x_1 + x_2$$

[Expression 6]

$$F_0 = k_0 x$$

[Expression 7]

$$F_1 = \mu_1 \frac{dx_1}{dt_1} = k_1 x_2$$

Therefore, the expression 8 is obtained by substituting the above expression 4 for the above expressions 5 to 7.

[Expression 8]

$$F = m\ddot{x} + k_0 x + k_1 x_2$$
$$= m\ddot{x} + k_0 x + k_1 \left( x - x_1 \right) = m\ddot{x} + \left( k_0 + k_1 \right) x - k_1 x_1$$

The following expression 9 is obtained by differentiating the above expression 8, and the expression 10 is obtained by multiplying both members of the expression 9 by "$\mu_1/k_1$".

[Expression 9]

$$\dot{F} = m\dddot{x} + \left( k_0 + k_1 \right) \dot{x} - k_1 \dot{x}_1$$

[Expression 10]

$$\frac{\mu_1}{k_1} \dot{F} = \frac{\mu_1}{k_1} m\dddot{x} + \frac{\mu_1}{k_1} \left( k_0 + k_1 \right) \dot{x} - \mu_1 \dot{x}_1$$

The expression 11 is obtained by adding the expressions 8 and 10.

[Expression 11]

$$F + \frac{\mu_1}{k_1} \dot{F} = m\ddot{x} + \frac{\mu_1}{k_1} m\dddot{x} + \left( k_0 + k_1 \right) x - k_1 x_1 + \frac{\mu_1}{k_1} \left( k_0 + k_1 \right) \dot{x} - \mu_1 \dot{x}_1$$

The following expression 12 is obtained by substituting the above expressions 5 and 7 for the expression 11.

[Expression 12]

$$F + \frac{\mu_1}{k_1}\dot{F} = m\ddot{x} + \frac{\mu_1}{k_1}m\dddot{x} + k_0 x + \mu_1\left(1 + k_0/k_1\right)\dot{x}$$

Here, assuming that $\mu_1 / k_1 = \tau_e$, $k_0 = E_r$, and $\mu_1 (1 / k_0 + 1 / k_1) = \tau_\delta$, the above expression 12 can be expressed by the expression 13, and the expression 14 is obtained by performing Laplace transform with respect to the expression 13.

[Expression 13]

$$F + \tau_e\dot{F} = \tau_e m\dddot{x} + m\ddot{x} + E_r\left(x + \tau_\delta\dot{x}\right)$$

[Expression 14]

$$\left(1 + \tau_e s\right) F\left(s\right) = \left\{\tau_e m s^3 + m s^2 + E_r\left(1 + \tau_\delta s\right)\right\} X\left(s\right)$$

The following expression 15 is obtained by summarizing the above expression 14 with "X(s)/F(s)".

[Expression 15]

$$\frac{X\left(s\right)}{F\left(s\right)} = \frac{1 + \tau_e s}{\tau_e m s^3 + m s^2 + E_r\left(1 + \tau_\delta s\right)}$$

The expression 15 represents a third order physical model (transfer function) which indicates a characteristic from the input force f to the output displacement x. When the spring with the spring constant $k_1 = \infty$ is used, "$\tau_e \to 0$" is satisfied. Because of "$\tau_\delta = \mu_1 \cdot 1 / k_0$", the following expression 16 which is a quadratic function is derived.

[Expression 16]

$$\frac{X\left(s\right)}{F\left(s\right)} = \frac{1}{m \cdot s^2 + \mu_1 \cdot s + k_0}$$

The quadratic function represented by the expression 16 is described as the reference model Gm in the present invention. That is, a function represented by the expression 17 is the reference model Gm. Here, "$\mu_1$" is equal to $\mu$ ($\mu_1 = \mu$).

[Expression 17]

$$Gm = \frac{1}{m \cdot s^2 + \mu \cdot s + k_0}$$

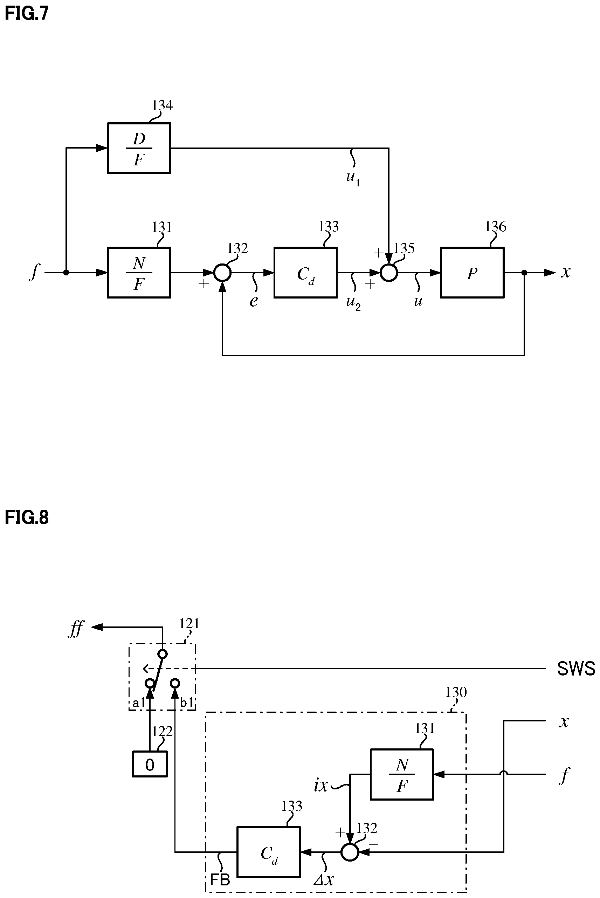

Next, an actual plant 136 of the electric power steering apparatus is represented by "P" which is denoted by the following expression 18. Then, when the reference model following control is designed by a two-degree of freedom control system, the system is a configuration of FIG. 7 expressed as actual models Pn and Pd. A block 133 (Cd) shows a control element section. (refer to, for example, Hajime MAEDA and Toshiharu SUGIE, "System Control Theory for Advanced Control", published by Asakura Shoten in Japan)

[Expression 18]

$$P = \frac{Pn}{Pd} = \frac{N}{D} = \frac{1}{m \cdot s^2 + \eta \cdot s}$$

In order to express the actual plant P with a ratio of a stable rational function, N and D are represented by the following expression 19. A numerator of "N" is that of "P", and a numerator of "D" is a denominator of "P". However, "$\alpha$" is determined such that a pole of "$(s + \alpha) = 0$" can be selected arbitrary.

[Expression 19]

$$N = \frac{1}{(s+\alpha)^2}, \qquad D = \frac{m \cdot s^2 + \eta \cdot s}{(s+\alpha)^2}$$

In the case of applying the configuration of FIG. 7 to the reference model Gm, it is necessary to set "1/F" as the following expression 20 in order to satisfy "x / f = Gm". The expression 20 is derived from the expressions 17 and 19.

[Expression 20]

$$\frac{1}{F} = GmN^{-1} = \frac{(s+\alpha)^2}{m \cdot s^2 + \mu \cdot s + k_0}$$

A block 131 (N/F) is represented by the following expression 21, and a block 134 (D/F) is represented by the following expression 22.

[Expression 21]
$$\frac{N}{F} = \frac{1}{m \cdot s^2 + \mu \cdot s + k_0}$$

[Expression 22]
$$\frac{D}{F} = \frac{m \cdot s^2 + \eta \cdot s}{m \cdot s^2 + \mu \cdot s + k_0}$$

In an example of the two-degree of freedom control system shown in FIG. 7, an input (the control command value corresponding to the virtual shaft force) u to the actual plant P is represented by the following expression 23.

[Expression 23]

$$u = u_1 + u_2 = \frac{D}{F} f + C_d e = \frac{D}{F} f + \left( \frac{N}{F} f - x \right) C_d$$

Further, an output (the rack displacement) x of the actual plant P is represented by the following expression 24.

[Expression 24]

$$x = uP = P \frac{D}{F} f + P \left( \frac{N}{F} f - x \right) C_d = P \frac{D}{F} f + P \frac{N}{F} C_d f - P C_d x$$

The expression 24 is summarized, terms of the output x are arranged in a left member, and terms of the input f are arranged in a right member, so that the following expression 25 is derived.

[Expression 25]

$$\left(1+PC_d\right)x = P\left(\frac{D}{F}+\frac{N}{F}C_d\right)f$$

The expression 26 is obtained by expressing the expression 25 as a transfer function of the output x to the input f. Here, the actual plant P is expressed as "P = Pn / Pd" after the third term.

[Expression 26]

$$\frac{x}{f} = \frac{P\left(\frac{D}{F}+\frac{N}{F}C_d\right)}{1+PC_d} = \frac{\frac{Pn}{Pd}\left(\frac{D}{F}+\frac{N}{F}C_d\right)}{1+\frac{Pn}{Pd}C_d} = \frac{\frac{D}{F}+\frac{N}{F}C_d}{\frac{Pd}{Pn}+C_d} = \frac{Pn}{F}\frac{NC_d+D}{PnC_d+Pd}$$

If the actual plant P is correctly expressed, it is possible to obtain the relations "Pn = N" and "Pd = D". The following expression 27 is obtained since the characteristic of the output x to the input f is represented as "Pn / F (= N / F)".

[Expression 27]

$$\frac{x}{f} = \frac{Pn}{F}\frac{PnC_d+Pd}{PnC_d+Pd} = \frac{Pn}{F}$$

In the case that the characteristic of the output x to the input f (the reference model (the transfer function)) is considered as the following expression 28, it is possible to achieve the expression 27 by putting "1/F" to the following expression 29.

[Expression 28]

$$\frac{x}{f} = \frac{\omega_n^{\,2}}{s+2\zeta\omega_n s+\omega_n^{\,2}}$$

[Expression 29]

$$\frac{1}{F} = \frac{\omega_n^{\,2}}{s+2\zeta\omega_n s+\omega_n^{\,2}}Pn^{-1}$$

Though the configuration shown in FIG. 7 comprises a feedback control system and a feedforward control system, the model following control can be performed by only either of them. Therefore, the present invention comprises only the feedback control system, as shown in FIG. 5, the viscoelastic model following control section 120 comprises only the feedback control section 130 served as the feedback control system.

Considering the above-described premise, a concrete configuration example of the viscoelastic model following control section 120 in the first embodiment will be described with reference to FIG. 8.

The configuration example shown in FIG. 8 corresponds to the configuration example shown in FIG. 5, and the rack shaft force f and the rack displacement x are inputted into the feedback control section 130. The feedback control section 130 comprises a feedback element (N/F) 131, a subtracting section 132 and a control element section 133, and the virtual shaft force FB from the feedback control section 130, that is, an output from the control element section 133 is inputted into a contact point b1 of the switching section 121. A fixed value "0" from a fixing section 122 has been inputted into a contact point a1 of the switching section 121.

The control element section 133 has a configuration of proportional-differential (PD) control, and a transfer function is represented by the following expression 30.

[Expression 30]

$$C_d = kp + kd \cdot s$$

kp is a proportional gain, kd is a differential gain, and they are control parameters of the feedback control section 130.

The rack shaft force f is inputted into the feedback element (N/F) 131 of the feedback control section 130, and the rack displacement x is subtraction-inputted into the subtracting section 132 of the feedback control section 130. The switching signal SWS is inputted into the switching section 121, a contact point of the switching section 121 is normally connected to the contact point a1, and is switched to the contact point b1 in accordance with the switching signal SWS.

The feedback element (N/F) 131 is equivalent to the viscoelastic model being the reference model, and the spring constant $k_0$ and the viscous friction coefficient $\mu$ which are parameters (model parameters) of the viscoelastic model are set so that the viscoelastic model simulates a reference vehicle characteristic by which the pulling-tendency does not occur. For example, they are set so as to have a spring characteristic of 12 Nm/rad. The feedback element (N/F) 131 converts the rack shaft force f into a virtual rack displacement ix on the basis of the expression 21 by using the set spring constant $k_0$ and viscous friction coefficient $\mu$. That is, the virtual rack displacement ix is equivalent to a rack displacement corresponding to the rack shaft force f in the characteristic by which the pulling-tendency does not occur. Therefore, in the case of inputting the rack shaft force f of the characteristic by which the pulling-tendency does not occur into the feedback element (N/F) 131 being the viscoelastic model, the virtual rack displacement ix matches with the rack displacement x being an actual rack displacement. On the other hand, in the case of inputting the rack shaft force f of a characteristic by which the pulling-tendency occurs, since the rack shaft force f is small, the virtual rack displacement ix does not advance to the rack end sufficiently, and a difference between the rack displacement x and the virtual rack displacement ix occurs . The virtual shaft force FB, and further the virtual shaft force ff are outputted through the control element section 133 on the basis of that difference $\Delta x$ (= ix - x). The virtual shaft force ff is converted into the control command value Irefc at the command value converting section 103, a motor 20 is driven and controlled on the basis of the compensation current command value Irefm obtained by adding the control command value Irefc to the current command value Iref, and a reaction force occurs. Actually, since the virtual rack displacement ix is smaller than the rack displacement x, the virtual shaft force ff becomes negative, an assist torque becomes small, and the reaction force (the virtual reaction force) becomes large virtually.

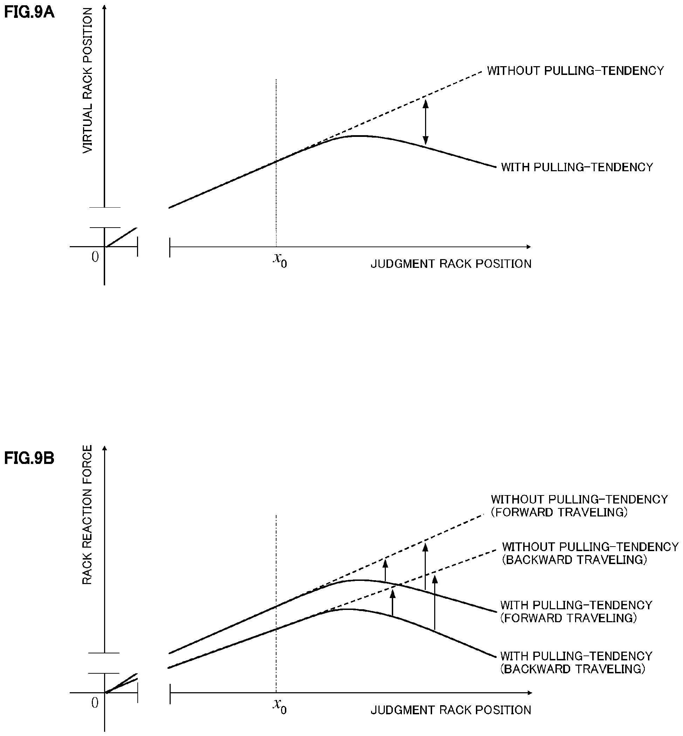

FIGs. 9A and 9B are diagrams showing states where a judgment rack position (hereinafter referred to a "virtual rack position") corresponding to the virtual rack displacement and a reaction force (hereinafter referred to a "rack reaction force") applied to the rack shaft are changed by occurrence of the virtual rack displacement and the virtual reaction force. FIG. 9A shows the state of the change of the virtual rack position, the horizontal axis shows the judgment rack position, the vertical axis shows the virtual rack position, the solid line represents the change in the case of the characteristic with the pulling-tendency, and the dotted line represents the change in the case of the characteristic without the pulling-tendency. FIG. 9B shows the state of the change of the rack reaction force, the horizontal axis shows the judgment rack position, the vertical axis shows the rack reaction force, the solid line represents the change in the case of forward traveling and backward traveling in the case of the characteristic with the pulling-tendency, and the dotted line represents the change in the case of forward traveling and backward traveling in the case of the characteristic without the pulling-tendency. As shown in FIG. 9A, in the case of the characteristic without the pulling-tendency, the judgment rack position matches with the virtual rack position. However, in the case of the characteristic with the pulling-tendency, after the judgment rack position exceeds the first rack position $x_0$, the virtual rack position is gradually turned to a decrease, and the difference shown by the arrow is caused between the virtual rack position and the judgment rack position (= the virtual rack position in the case of the characteristic without the pulling-tendency) . As a result, as shown in FIG. 9B, in the case of the characteristic with the pulling-tendency, the rack reaction force decreases. Therefore, the virtual reaction force is made arise by feeding back the virtual shaft force to the current command value using the above difference and decreasing the assist torque, the rack reaction force is made increased as shown by the arrow in FIG. 9B, and the characteristic is made close to the characteristic without the pulling-tendency. Thus, a driver can feel an appropriate reaction force, moreover, it is possible to effectively return a steering wheel in a direction to a neutral position with hands free and so on, and it is possible to suppress uncomfortable feeling to the driver caused by the pulling-tendency.

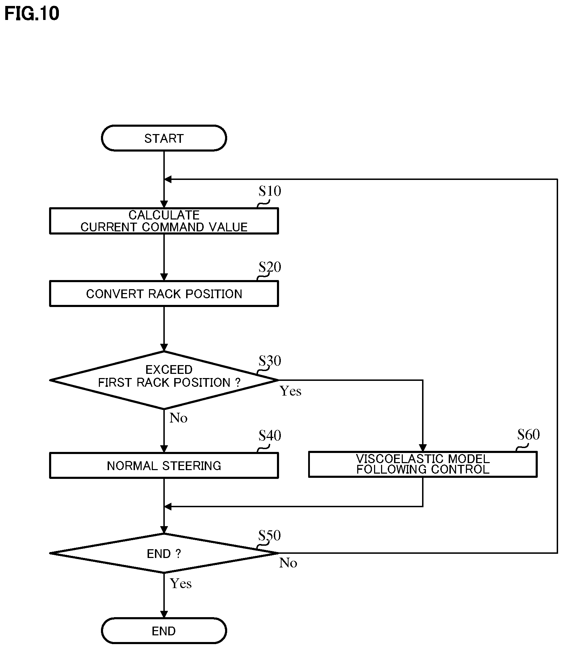

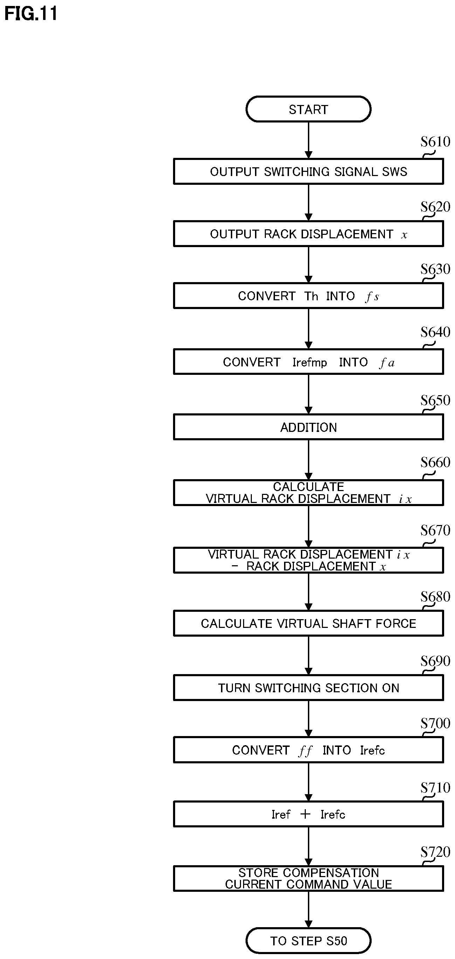

In such a configuration, first, a whole operating example of the first embodiment will be described with reference to a flowchart shown in FIG. 10, and next, an operating example of the viscoelastic model following control will be described with reference to a flowchart shown in FIG. 11.

In a start stage, the switching section 121 is turned off (connected to the contact point a1) in accordance with the switching signal SWS, the previous compensation current command value Irefmp in the storing section 106 is set to zero. When the operation is started, the torque control section 31 calculates the current command value Iref on the basis of the steering torque Th and the vehicle speed Vel (Step S10), and the rack position converting section 100 converts the rotational angle θe from the rotational angle sensor 21 into the judgement rack position Rx (Step S20). The rack position judging section 110 judges whether the judgment rack position Rx exceeds the first rack position $x_0$ or not (Step S30) . When the rack position judging section 110 judges that the judgment rack position Rx does not exceed the first rack position $x_0$, the virtual shaft force ff is not outputted from the viscoelastic model following control section 120, a normal steering control based on the current command value Iref is performed (Step S40), and is continued to the end (Step S50).

On the other hand, when the rack position judging section 110 judges that the judgment rack position Rx exceeds the first rack position $x_0$, the viscoelastic model following control is performed by the viscoelastic model following control section 120 (Step S60).

In the viscoelastic model following control, as shown in FIG. 11, the switching signal SWS is outputted from the rack position judging section 110 (Step S610), and the rack displacement x is also outputted (Step S620). The rack displacement x is subtraction-inputted into the subtracting section 132. The first shaft force converting section 101 converts the steering torque Th into the steering shaft force fs in accordance with the expression 1 (Step S630), and the second shaft force converting section 102 converts the previous compensation current command value Irefmp stored in the storing section 106 into the assist shaft force fa in accordance with the expression 2 (Step S640). The steering shaft force fs and the assist shaft force fa are added at the adding section 104 (Step S650), and the addition result is inputted into the feedback element (N/F) 131 as the rack shaft force f. The feedback element (N/F) 131 converts the rack shaft force f into the virtual rack displacement ix by using the spring constant $k_0$, the viscous friction coefficient $\mu$ and the mass m on the basis of the expression 21 (Step S660) . The virtual rack displacement ix is addition-inputted into the subtracting section 132, the rack displacement x is subtracted from the virtual rack displacement ix (Step S670), and the subtraction value $\Delta x$ is converted into the virtual shaft force FB at the control element section 133 by using the expression 30 (Step S680). The virtual shaft force FB is outputted from the control element section 133, and is inputted into the contact point b1 of the switching section 121.

The switching signal SWS from the rack position judging section 110 is inputted into the switching section 121, and the switching section 121 is turned on (switches the contact point from a1 to b1) (Step S690). When the switching section 121 is turned on, the virtual shaft force FB from the feedback control section 130 is outputted as the virtual shaft force ff, and the virtual shaft force ff is converted into the control command value Irefc at the command value converting section 103 in accordance with the expression 3 (Step S700) . The control command value Irefc is inputted into the adding section 105, is added to the current command value Iref, and the compensation current command value Irefm is outputted (Step S710) . The compensation current command value Irefm is stored as the previous compensation current command value Irefmp in the storing section 106 (Step S720), the steering control is performed on the basis of the compensation current command value Irefm, and the operation is continued to the step S50.

Next, a second embodiment of the present invention will be described.

The control parameters (the proportional gain kp and the differential gain kd) of the feedback control section are fixed values in the first embodiment, while they are variable on the basis of the rack displacement in the second embodiment. For example, the control parameters are made small in the vicinity of the point where the rack displacement is zero, and are make larger as the rack displacement goes in the direction to the rack end. Making the control parameters small in the vicinity of the point where the rack displacement is zero enables a change of the virtual reaction force to become small, and enables a driver not to feel the change easily.

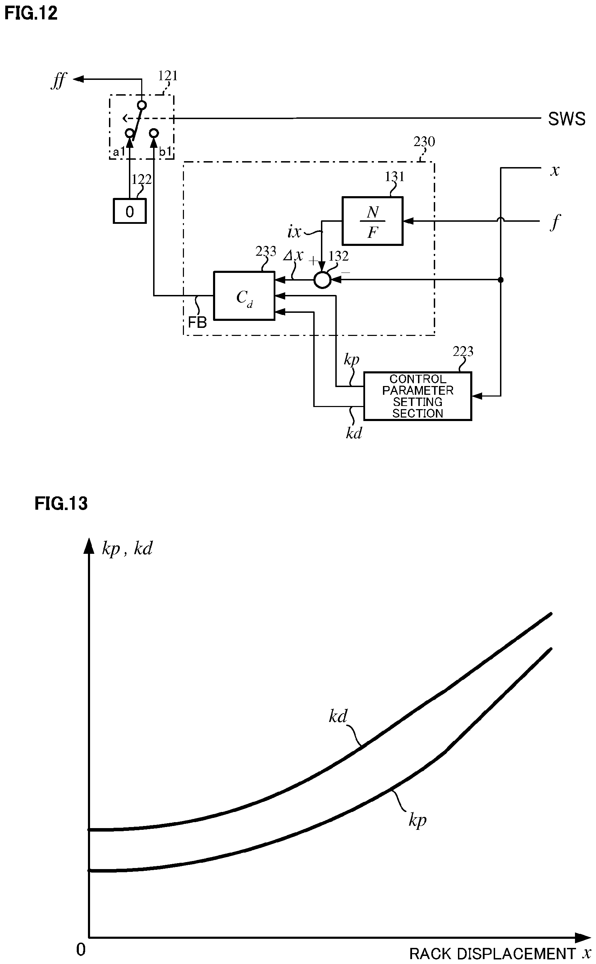

FIG. 12 shows a detailed configuration example of a viscoelastic model following control section in the second embodiment. Compared with the configuration example of the viscoelastic model following control section in the first embodiment shown in FIG. 8, a control parameter setting section 223 is added, and the control element section 133 is exchanged for a control element section 233. Other configuration elements are the same as those of the first embodiment, so that the explanation is omitted.

The control parameter setting section 223 outputs the proportional gain kp and the differential gain kd, for example, which have characteristics shown in FIG. 13 with respect to the rack displacement x. The control element section 233 inputs the proportional gain kp and the differential gain kd, and uses them for the conversion to the virtual shaft force FB with the expression 30. By applying the characteristics shown in FIG. 13 to the proportional gain kp and the differential gain kd, a control gain of the control element section 233 becomes small in a range where the rack displacement x is small, and the control gain increases as the rack displacement increases.

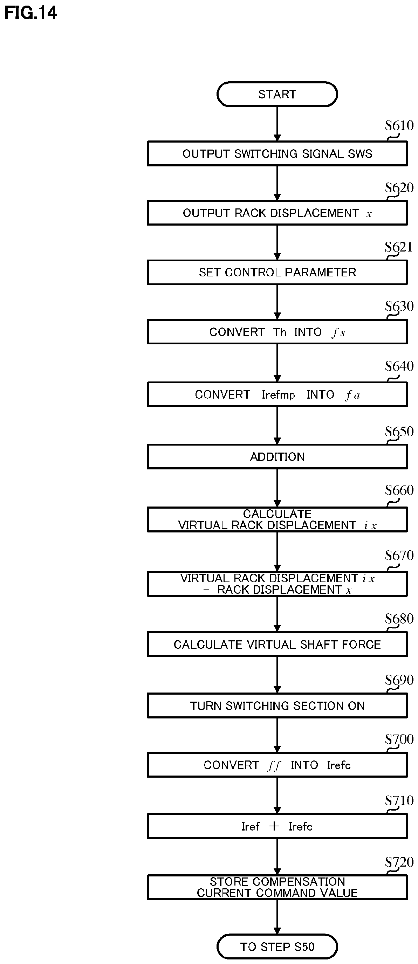

In such a configuration, an operating example of the second embodiment will be described with reference to a flowchart shown in FIG. 14. Compared with the operating example of the first embodiment, an operation of the viscoelastic model following control is different in the operating example of the second embodiment, and the operation of the control parameter setting section 223 is only added in the operation of the viscoelastic model following control. An operating example of the viscoelastic model following control is shown in FIG. 14. Compared with the operating example of the first embodiment shown in FIG. 11, the step S621 is added. Other operations are the same as those of the first embodiment.

In the step S621, the control parameter setting section 223 inputs the rack displacement x outputted from the rack position judging section 110, and sets the proportional gain kp and the differential gain kd which are obtained in accordance with the characteristics shown in FIG. 13 depending on the rack displacement x to the control element section 233. In the step 680, the control element section 233 converts the subtraction value $\Delta x$ into the virtual shaft force FB in accordance with the expression 30 by using the set proportional gain kp and differential gain kd.

Moreover, the characteristics of the proportional gain kp and the differential gain kd are not limited to the characteristics changing as shown in FIG. 13, and may be characteristics changing linearly and so on.

A third embodiment of the present invention will be described.

The control parameters of the feedback control section are variable on the basis of the rack displacement in the second embodiment, while they are variable on the basis of the virtual rack displacement in the third embodiment.

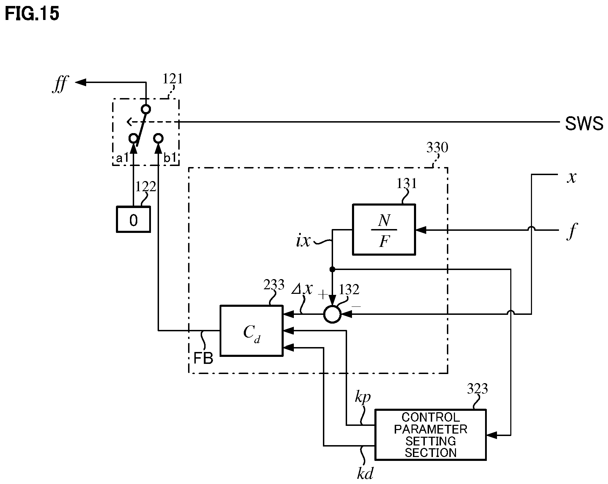

FIG. 15 shows a detailed configuration example of a viscoelastic model following control section in the third embodiment. Compared with the configuration example of the viscoelastic model following control section in the second embodiment shown in FIG. 12, the virtual rack displacement ix is inputted into a control parameter setting section 323 instead of the rack displacement x. The control parameter setting section 323 outputs the proportional gain kp and the differential gain kd, for example, which have characteristics similar to the characteristics shown in FIG. 13 with respect to the virtual rack displacement ix. Configurations other than the control parameter setting section 323 are the same as those of the viscoelastic model following control section in the second embodiment.

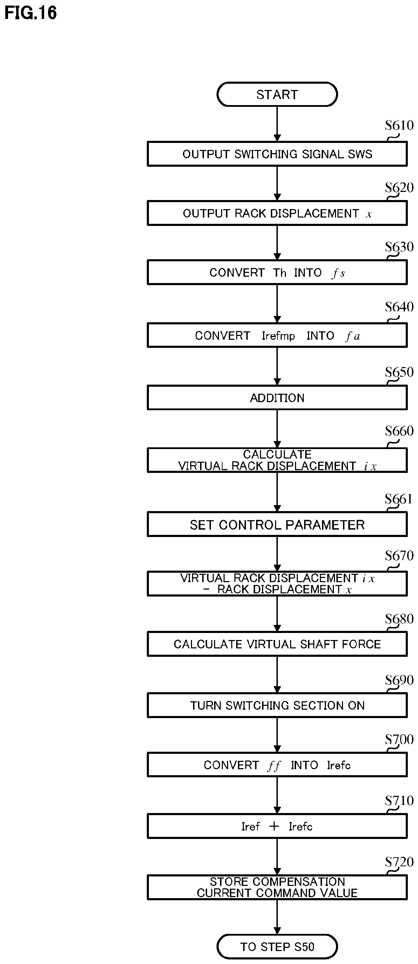

An operating example of the viscoelastic model following control in the third embodiment is shown in FIG. 16. Compared with the operating example of the viscoelastic model following control in the second embodiment shown in FIG. 14, since the third embodiment sets the control parameters by using the virtual rack displacement ix, the timing to set the control parameters is different. That is, the viscoelastic model following control in the third embodiment sets the control parameters not after the step S620 but after the step S660 where the virtual rack displacement ix is calculated (Step S661).

In the step S661, the control parameter setting section 323 inputs the virtual rack displacement ix outputted from the feedback element (N/F) 131, and sets the proportional gain kp and the differential gain kd which are obtained in accordance with the characteristics similar to the characteristics shown in FIG. 13 depending on the virtual rack displacement ix to the control element section 233. In the step 680, the control element section 233 converts the subtraction value $\Delta x$ into the virtual shaft force FB in accordance with the expression 30 by using the set proportional gain kp and differential gain kd.

Moreover, as with the second embodiment, the characteristics of the proportional gain kp and the differential gain kd are not limited to the characteristics changing as shown in FIG. 13, and may be characteristics changing linearly and so on. Further, they may not match the characteristics used in the second embodiment.

A fourth embodiment of the present invention will be described.

The fourth embodiment sets a predetermined position (a second rack position) $x_n$ which is larger than the first rack position $x_0$ and smaller than a rack end position in addition to the first rack position $x_0$, and does not increase the virtual shaft force ff in the case that the rack displacement x exceeds the second rack position $x_n$. In the case of excessively decreasing the assist torque in the vicinity of the rack end, a steering force of a driver increases, and operability becomes bad, so that it is possible to suppress by setting the second rack position $x_n$.

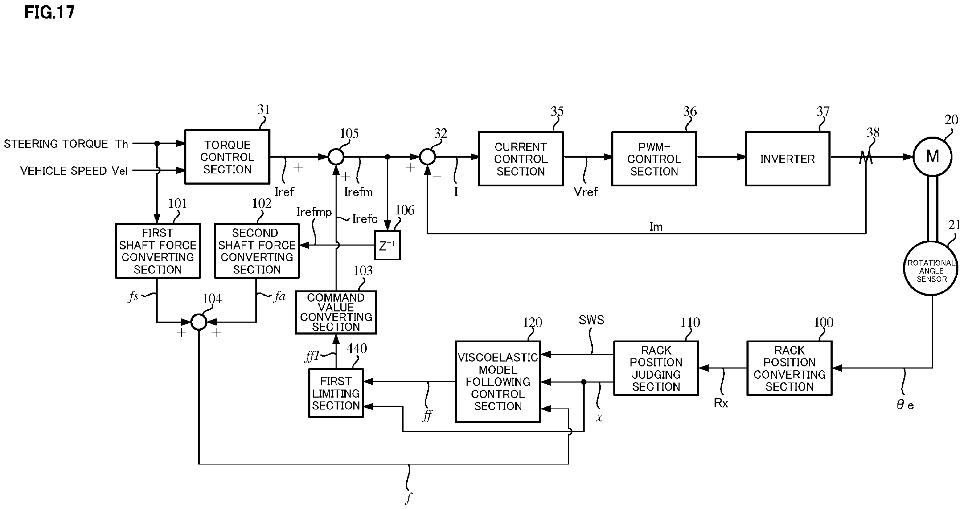

A configuration example of the fourth embodiment is shown in FIG. 17. Compared with the configuration example of the first embodiment shown in FIG. 3, a first limiting section 440 is added. Other configuration elements are the same as those of the first embodiment, so that the explanation is omitted.

The first limiting section 440 inputs the virtual shaft force ff outputted from the viscoelastic model following control section 120 and the rack displacement x outputted from the rack position judging section 110, and limits the virtual shaft force ff on the basis of the rack displacement x.

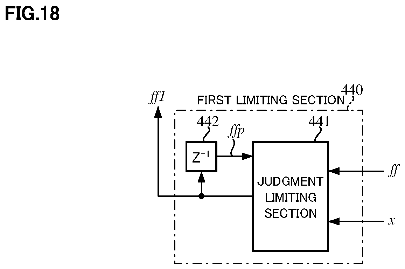

A configuration example of the first limiting section 440 is shown in FIG. 18. The first limiting section 440 comprises a judgment limiting section 441 and a storing section $(Z^{-1})$ 442. The judgment limiting section 441 inputs the virtual shaft force ff and the rack displacement x, and outputs the virtual shaft force ff not changed as a virtual shaft force ff1 in the case that the rack displacement x does not exceed the second rack position $x_n$. The virtual shaft force ff1 is stored as a virtual shaft force (a previous virtual shaft force ffp) which is one sample before in the storing section 442. In the case that the rack displacement x exceeds the second rack position $x_n$, the judgment limiting section 441 outputs the previous virtual shaft force ffp stored in the storing section 442 as the virtual shaft force ff1. Consequently, while the rack displacement x exceeds the second rack position $x_n$, the virtual shaft force ff just before the excess is continuously outputted as the virtual shaft force ff1.

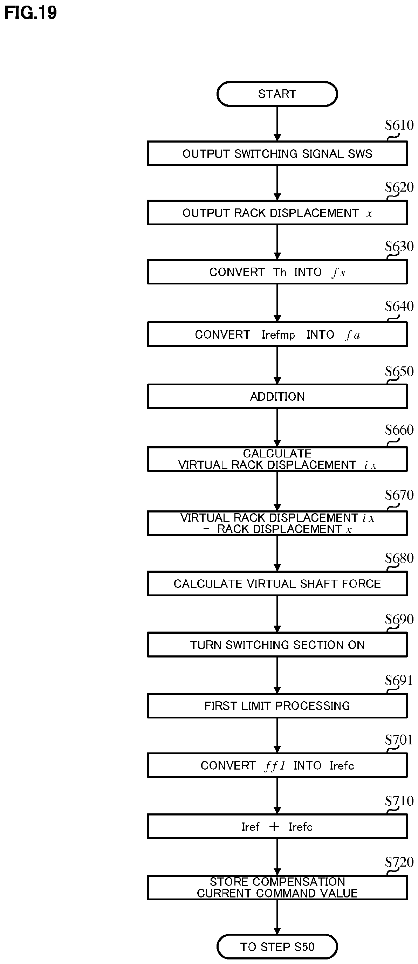

An operating example of the fourth embodiment is shown in FIG. 19. Compared with the operating example of the first embodiment, in the operating example of the fourth embodiment, an operation of the viscoelastic model following control is different, and in the operation of the viscoelastic model following control, the operation of the first limiting section 440 is only added. Other operations are the same as the operating example of the first embodiment.

The rack displacement x outputted from the rack position judging section 110 in the step S620 is subtraction-inputted into the subtracting section 132 of the viscoelastic model following control section 120, and is also inputted into the first limiting section 440. Further, the switching section 121 is turned on in the step S690, the virtual shaft force ff outputted from the feedback control section 130 of the viscoelastic model following control section 120 is also inputted into the first limiting section 440. The first limiting section 440 performs limit processing (hereinafter referred to "first limit processing") of the virtual shaft force ff on the basis of the rack displacement x (Step S691), and the virtual shaft force ff1 obtained by the limit processing is converted into the control command value Irefc at the command value converting section 103 (Step S701).

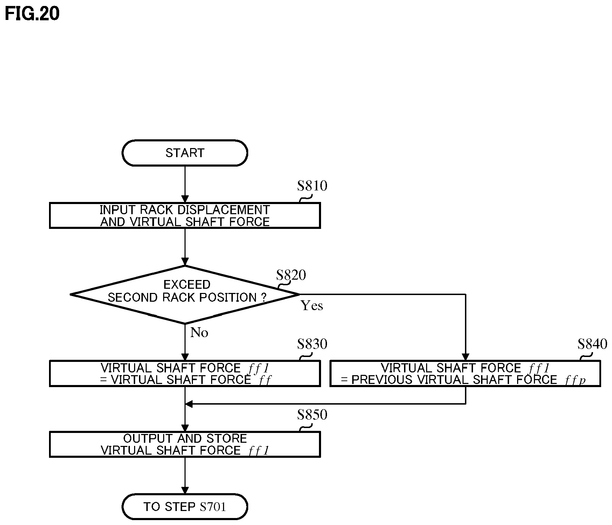

An operating example of the first limit processing at the first limiting section 440 is shown in FIG. 20. The rack displacement x and the virtual shaft force ff are inputted into the judgment limiting section 441 (Step S810). The judgment limiting section 441 compares the preset second rack position $x_n$ and the rack displacement x (Step S820). In the case that the rack displacement x does not exceed the second rack position $x_n$, the judgment limiting section 441 sets the virtual shaft force ff1 to the virtual shaft force ff as it is (Step S830). In the case that the rack displacement x exceeds the second rack position $x_n$, the judgment limiting section 441 sets the virtual shaft force ff1 to the previous virtual shaft force ffp stored in the storing section 442 (Step S840). The virtual shaft force ff1 is outputted to the command value converting section 103, and is stored as the previous virtual shaft force ffp in the storing section 442 (Step S850). The operation is continued to the step S701.

Moreover, as long as the second rack position $x_n$ is between the first rack position $x_0$ and the rack end position, the second rack position $x_n$ may be set at an appropriate position, and may be set to different values when a vehicle travels forward and when the vehicle travels backward. Though the virtual shaft force ff1 is set to the previous virtual shaft force when the rack displacement x exceeds the second rack position $x_n$, the virtual shaft force ff1 may be set to an average value, a maximum value (a minimum value when the value is negative) or the like of past virtual shaft forces acquired in the case that the rack displacement x does not exceed the second rack position $x_n$, or may be set to a fixed value.

A fifth embodiment of the present invention will be described.

The fourth embodiment limits the virtual shaft force depending on a position of the rack displacement, while the fifth embodiment limits the virtual shaft force by setting an upper limit and a lower limit to the virtual shaft force so that the virtual shaft force does not increase excessively. In embodiments since the fifth embodiment, a rotational torque to the rack shaft such as a rack shaft force is set so as to become positive when a steering wheel is turned to the right (hereinafter this state is referred to a "right turn steering"), and is set so as to become negative when the steering wheel is turned to the left (hereinafter this state is referred to a "left turn steering").

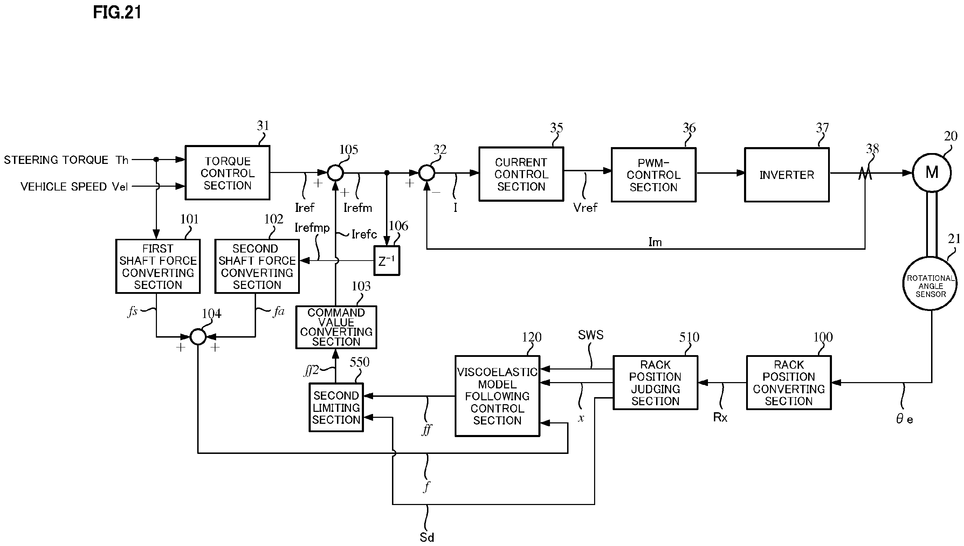

A configuration example of the fifth embodiment is shown in FIG. 21. Compared with the configuration example of the fourth embodiment shown in FIG. 17, the first limiting section 440 is exchanged for a second limiting section 550, and the rack position judging section 110 is exchanged for a rack position judging section 510. Other configuration elements are the same as those of the fourth embodiment, so that the explanation is omitted. Moreover, instead of providing the second limiting section 550 instead of the first limiting section 440, it is possible to provide both the first limiting section and the second limiting section.

The rack position judging section 510 outputs a direction signal Sd indicating a steering direction of a steering wheel in addition to the rack displacement x and the switching signal SWS. The rack position judging section 510 judges the steering direction of the steering wheel on the basis of the inputted judgment rack position Rx, outputs the direction signal Sd set to a "right turn" in the case of the right turn steering, and outputs the direction signal Sd set to a "left turn" in the case of the left turn steering.

The second limiting section 550 limits a maximum value and a minimum value of the virtual shaft force ff outputted from the viscoelastic model following control section 120. In order to limit them, the second limiting section 550 sets an upper limit and a lower limit (hereinafter the upper limit and the lower limit are generally referred to a "limit value") for the virtual shaft force ff, and sets limit values in the case of the right turn steering and in the case of the left turn steering respectively. For example, in the case of the right turn steering, an upper limit (hereinafter referred to a "right turn upper limit") RU1 is set to a predetermined value Fx1 (for example, 2 newton meter (Nm)) as the following expression 31, and a lower limit (hereinafter referred to a "right turn lower limit") RL1 is set to a value obtained by subtracting a predetermined value Fx2 (for example, 10 Nm) from a sign-inverted value of a maximum output fmax (being a positive value) of the system as the following expression 32.

$$[\text{Expression 31}]$$

$$RU1 = Fx1$$

$$[\text{Expression 32}]$$

$$RL1 = -fmax - Fx2$$

In the case of the left turn steering, an upper limit (hereinafter referred to a "left turn upper limit") LU1 and a lower limit (hereinafter referred to a "left turn lower limit") LL1 are set to values obtained by replacing one of the upper limit and the lower limit in the case of the right turn steering with the other. That is, they are set as the following expressions 33 and 34.

$$[\text{Expression 33}]$$

$$LU1 = fmax + Fx2$$

$$[\text{Expression 34}]$$

$$LL1 = -Fx1$$

The second limiting section 550 inputs the direction signal Sd outputted from the rack position judging section 510. In the case that the direction signal Sd is the "right turn", the second limiting section 550 limits the virtual shaft force ff by using the right turn upper limit RU1 and the right turn lower limit RL1, and in the case that the direction signal Sd is the "left turn", the second limiting section 550 limits the virtual shaft force ff by using the left turn upper limit LU1 and the left turn lower limit LL1. The limited virtual shaft force ff is outputted as a virtual shaft force ff2 to the command value converting section 103.

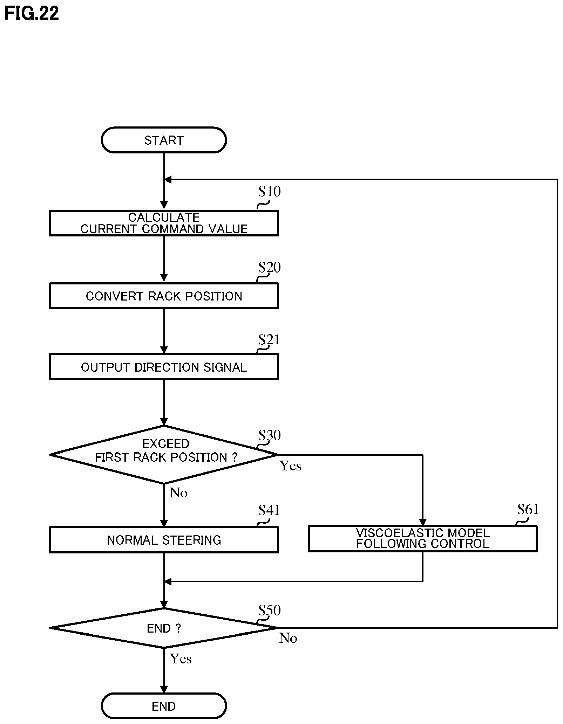

In such a configuration, an operating example of the fifth embodiment will be described with reference to flowcharts shown in FIGs. 22, 23 and 24.

A whole operating example is shown as a flowchart in FIG. 22. Compared with the flowchart shown in FIG. 10, outputting the direction signal Sd (Step S21) is added, and the normal steering (Step S40) and the viscoelastic model following control (Step S60) are changed (Steps S41 and S61) because processing at the second limiting section 550 is added to them.

In the step S21, the rack position judging section 510 judges the steering direction of the steering wheel on the basis of the inputted judgment rack position Rx, and outputs the judgment result (the right turn or the left turn) as the direction signal Sd to the second limiting section 550.

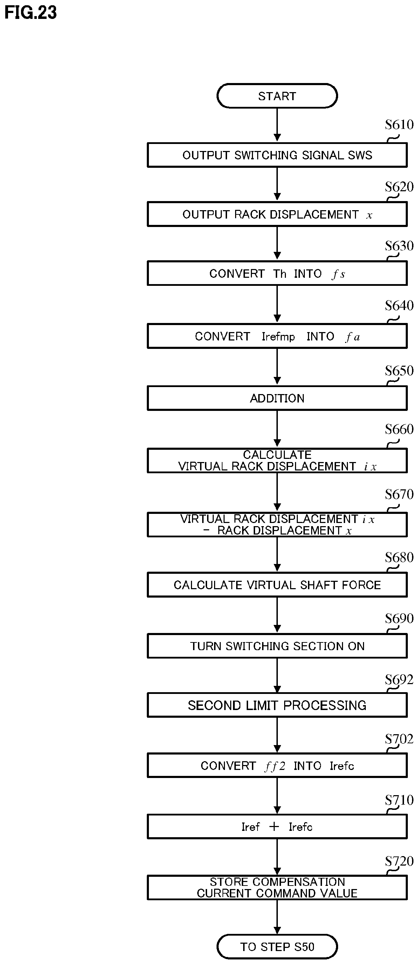

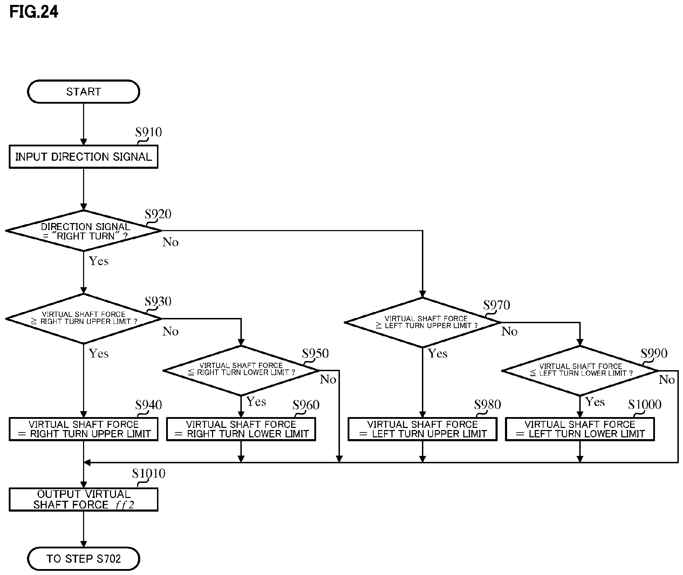

An operating example of the viscoelastic model following control (Step S61) is shown by a flowchart in FIG. 23. Compared with the operating example of the fourth embodiment shown in FIG. 19, the steps S691 and S701 are exchanged for the steps S692 and S702 respectively. In the step S692, limit processing (hereinafter referred to "second limit processing") of the virtual shaft force ff outputted from the viscoelastic model following control section 120 is performed at the second limiting section 550 on the basis of the direction signal Sd outputted from the rack position judging section 510. An operating example of the second limiting section 550 is shown in FIG. 24. The second limiting section 550 inputs the direction signal Sd (Step S910). In the case that the direction signal Sd is the "right turn" (Step S920), the second limiting section 550 sets a value of the virtual shaft force ff to the right turn upper limit RU1 (Step S940) when the virtual shaft force ff is larger than or equal to the right turn upper limit RU1 (Step S930), and sets the value of the virtual shaft force ff to the right turn lower limit RL1 (Step S960) when the virtual shaft force ff is smaller than or equal to the right turn lower limit RL1 (Step S950) . Otherwise, the second limiting section 550 does not change the value of the virtual shaft force ff. In the case that the direction signal Sd is the "left turn" (Step S920), the second limiting section 550 sets a value of the virtual shaft force ff to the left turn upper limit LU1 (Step S980) when the virtual shaft force ff is larger than or equal to the left turn upper limit LU1 (Step S970), and sets the value of the virtual shaft force ff to the left turn lower limit LL1 (Step S1000) when the virtual shaft force ff is smaller than or equal to the left turn lower limit LL1 (Step S990). Otherwise, the second limiting section 550 does not change the value of the virtual shaft force ff. The limited virtual shaft force ff is outputted as the virtual shaft force ff2 (Step S1010), the virtual shaft force ff2 is converted into the control command value Irefc at the command value converting section 103 (Step S702), and the control command value Irefc is added to the current command value Iref at the adding section 105.

Also in the normal steering (Step S41), the virtual shaft force ff outputted from the viscoelastic model following control section 120 is limited as with the viscoelastic model following control. However, since the value of the virtual shaft force ff is zero in this case, the virtual shaft force ff is not limited, and is outputted as the virtual shaft force ff2 as it is.

Moreover, though the left turn upper limit and the left turn lower limit are the values obtained by replacing one of the right turn upper limit and the right turn lower limit with the other, they may not be the values obtained by the replacement by using different predetermined values and so on. Further, it is possible to use the same limit value in the right turn steering and the left turn steering. In this case, since the direction signal Sd is not necessary, judging the steering direction of the steering wheel at the rack position judging section 510 and switching the operation with the direction signal Sd at the second limiting section 550, are also not necessary.

A sixth embodiment of the present invention will be described.

The limit values to the virtual shaft force ff are fixed values in the fifth embodiment, while they are set on the basis of the rack shaft force f inputted into the viscoelastic model following control section 120 in the sixth embodiment. The setting based on the rack shaft force f enables setting of more appropriate limit values.

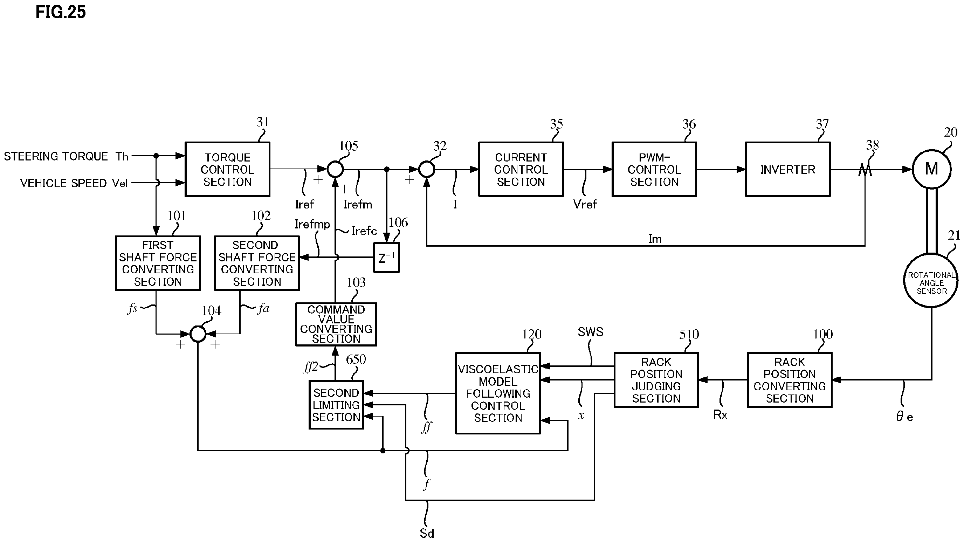

A configuration example of the sixth embodiment is shown in FIG. 25. Compared with the configuration example of the fifth embodiment shown in FIG. 21, the second limiting section 550 is exchanged for a second limiting section 650. The rack shaft force f outputted from the adding section 104 is inputted into the second limiting section 650 in addition to the virtual shaft force ff and the direction signal Sd, and the second limiting section 650 limits a maximum value and a minimum value of the virtual shaft force ff on the basis of the direction signal Sd and the rack shaft force f. Specifically, for example, a right turn upper limit RU2 is set to a value obtained by adding a predetermined value Fx3 (for example, 2 Nm) to the rack shaft force f as the following expression 35, and a right turn lower limit RL2 is set to a value obtained by subtracting a predetermined value Fx4 (for example, 10 Nm) from a sign-inverted value of the rack shaft force f as the following expression 36.

$$[\text{Expression 35}]$$

$$RU2 = f + Fx3$$

$$[\text{Expression 36}]$$

$$RL2 = -f - Fx4$$

A left turn upper limit LU2 and a left turn lower limit LL2 are set to values obtained by replacing one of the right turn upper limit RU2 and the right turn lower limit RL2 with the other as the following expressions 37 and 38.

$$[\text{Expression 37}]$$

$$LU2 = -f + Fx4$$

$$[\text{Expression 38}]$$

$$LL2 = f - Fx3$$

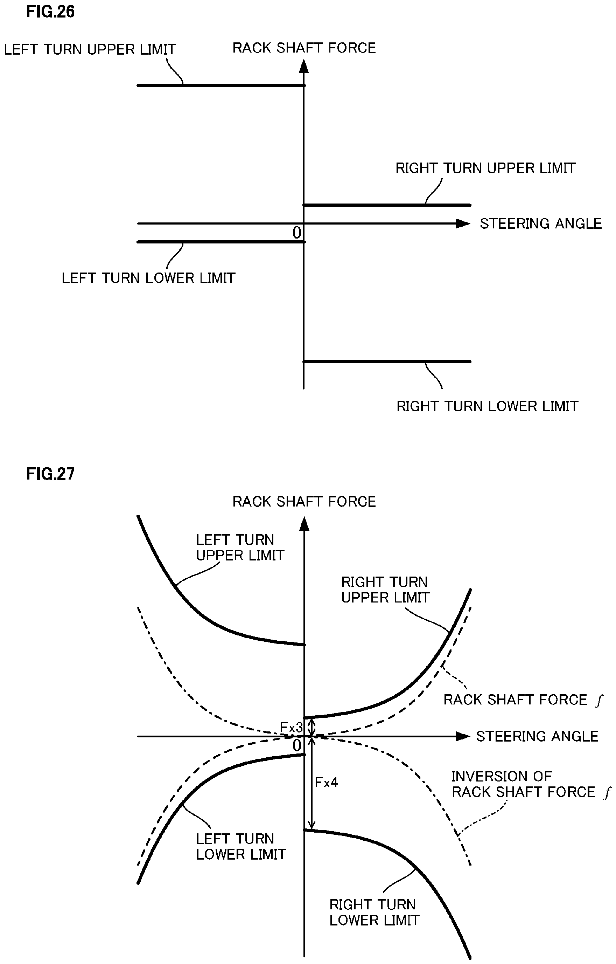

For example, in the case that the rack shaft force f changes for the steering angle as shown by the broken line in FIG. 27, the limit values of the fifth embodiment are constant not depending on the rack shaft force f as shown in FIG. 26, while the limit values of the sixth embodiment change as shown by the solid line in FIG. 27.

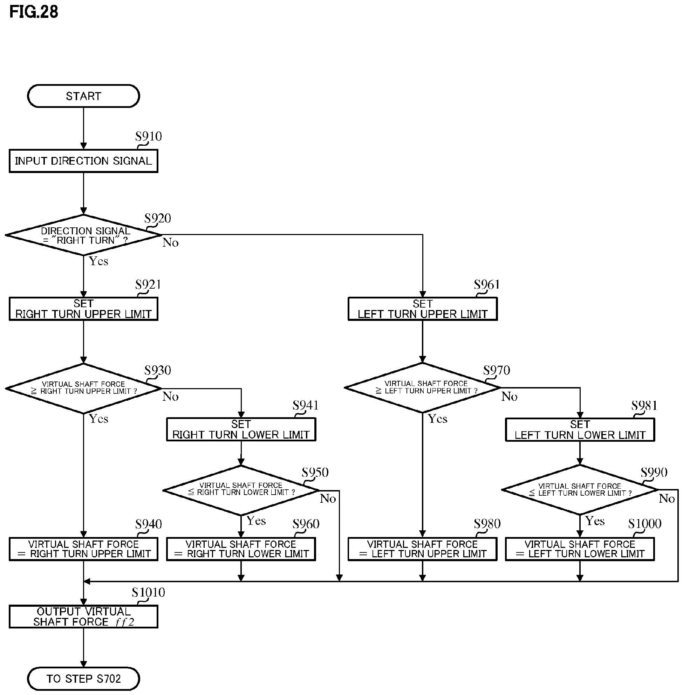

In such a configuration, an operating example of the sixth embodiment will be described with reference to a flowchart shown in FIG. 28.

FIG. 28 is a flowchart showing an operating example of the second limiting section 650. Compared with the operating example of the fifth embodiment shown in FIG. 24, respective limit values are set on the basis of the rack shaft force f outputted from the adding section 104 before comparing the virtual shaft force ff outputted from the viscoelastic model following control section 120 with the limit values. That is, the right turn upper limit RU2 is set in accordance with the expression 35 (Step S921) before comparing the virtual shaft force ff with the right turn upper limit RU2, the right turn lower limit RL2 is set in accordance with the expression 36 (Step S941) before comparing the virtual shaft force ff with the right turn lower limit RL2, the left turn upper limit LU2 is set in accordance with the expression 37 (Step S961) before comparing the virtual shaft force ff with the left turn upper limit LU2, and the left turn lower limit LL2 is set in accordance with the expression 38 (Step S981) before comparing the virtual shaft force ff with the left turn lower limit LL2. Other operations are the same as those of the fifth embodiment.

Moreover, the predetermined values Fx1 and Fx2 which are used in the fifth embodiment may be used as the predetermined values Fx3 and Fx4 which are used in calculating the limit values. Further, the left turn upper limit and the left turn lower limit may not be the values obtained by replacing one of the right turn upper limit and the right turn lower limit with the other as with the fifth embodiment. They may be not the replaced values by using different predetermined values and so on. The same limit values may be used in the right turn steering and the left turn steering.

A seventh embodiment of the present invention will be described.

The seventh embodiment sets the limit values on the basis of the rack shaft force f as with the sixth embodiment, and in order to perform stronger limitation, the seventh embodiment inverts the addition and subtraction of the predetermined values performed for the calculations of the right turn lower limit and the left turn upper limit in the sixth embodiment. However, the right turn lower limit does not become larger than zero and the left turn upper limit does not become smaller than zero so as not to add an assist torque in a reverse direction.

A configuration example of the seventh embodiment is basically the same as that of the sixth embodiment as shown in FIG. 25. However, an operation at the second limiting section is different. That is, in the second limiting section, for example, a right turn upper limit RU3 is set to a value obtained by adding a predetermined value Fx5 (for example, 2 Nm) to the rack shaft force f as the following expression 39, a right turn lower limit RL3 is set to a value obtained by adding a predetermined value Fx6 (for example, 5 Nm) to a sign-inverted value of the rack shaft force f as the following expression 40, and the right turn lower limit RL3 is set to zero when the right turn lower limit RL3 exceeds zero.

$$[\text{Expression 39}]$$

$$RU3 = f + Fx5$$

$$[\text{Expression 40}]$$

$$RL3 = -f + Fx6$$

A left turn upper limit LU3 and a left turn lower limit LL3 are set to values obtained by replacing one of the right turn upper limit RU3 and the right turn lower limit RL3 with the other as the following expressions 41 and 42, and the left turn upper limit LU3 is set to zero when the left turn upper limit LU3 is smaller than zero.

$$[\text{Expression 41}]$$

$$LU3 = -f - Fx6$$

$$[\text{Expression 42}]$$

$$LL3 = f - Fx5$$

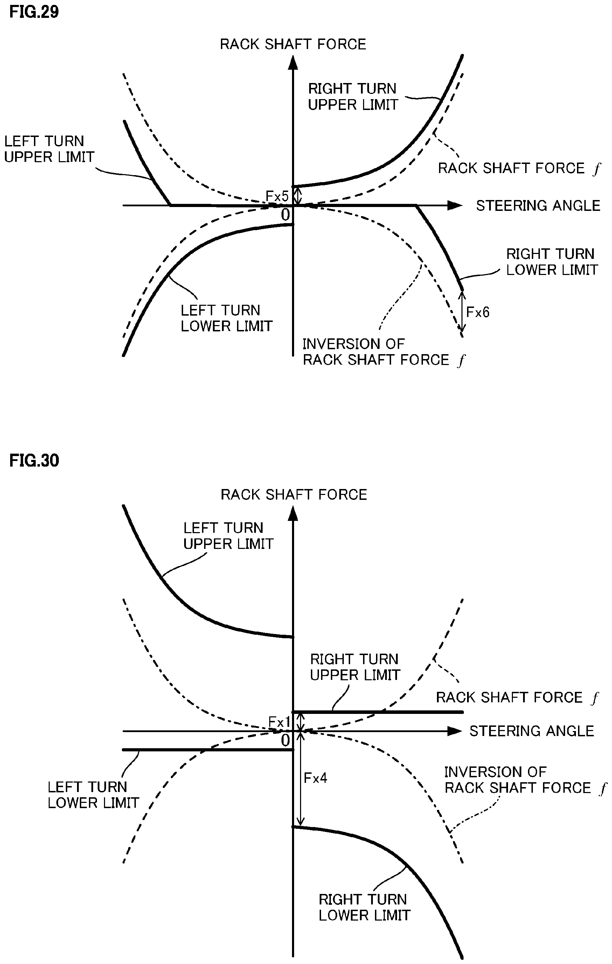

For example, in the case that the rack shaft force f changes for the steering angle as shown by the broken line in FIG. 29, the limit values of the seventh embodiment change as shown by the solid line.

With respect to an operation of the seventh embodiment, the operation at the second limiting section is only different from that of the sixth embodiment as described above, and other operations are the same as those of the sixth embodiment.

Moreover, the predetermined values which are used in the fifth embodiment and/or the sixth embodiment may be used as the predetermined values Fx5 and Fx6 which are used in calculating the limit values. Further, the left turn upper limit and the left turn lower limit may not be the values obtained by replacing one of the right turn upper limit and the right turn lower limit with the other. They may be not the replaced values by using different predetermined values and so on.

An eighth embodiment of the present invention will be described.

The eighth embodiment sets the limit values by a combination of setting methods of the limit values in the fifth embodiment and the sixth embodiment. For example, a right turn upper limit and a left turn lower limit are set as with the fifth embodiment, and a right turn lower limit and a left turn upper limit are set as with the sixth embodiment. That is, a right turn upper limit RU4, a right turn lower limit RL4, a left turn upper limit LU4 and a left turn lower limit LL4 are set as the following expressions 43 to 46.

$$[\text{Expression 43}]$$

$$RU4 = Fx1$$

$$[\text{Expression 44}]$$

$$RL4 = -f - Fx4$$

$$[\text{Expression 45}]$$

$$LU4 = -f + Fx4$$

[Expression 46]

$$LL4 = -Fx1$$

For example, in the case that the rack shaft force f changes for the steering angle as shown by the broken line in FIG. 30, the limit values of the eighth embodiment change as shown by the solid line.

With respect to a configuration example and an operating example of the eighth embodiment, an operation at the second limiting section is only different from that of the sixth embodiment as described above, and others are the same as the configuration example and the operating example of the sixth embodiment.

As the combination of the setting methods of the limit values, it is possible to set the limit values by a combination reverse to the above, that is, to set the right turn upper limit and the left turn lower limit as with the sixth embodiment and set the right turn lower limit and the left turn upper limit as with the fifth embodiment. Further, it is possible to combine the setting methods of the limit values in the fifth embodiment and the seventh embodiment.

A ninth embodiment of the present invention will be described.

The sixth to eighth embodiments set the limit values on the basis of the rack shaft force f, while the ninth embodiment changes the limit values in accordance with a steering velocity in addition. This enables a more flexible response, for example, the pulling-tendency is suppressed strongly by easing the limitation of the virtual shaft force when the steering velocity is high, and an excessive reaction force is suppressed by limiting the virtual shaft force strongly when the steering velocity is low.

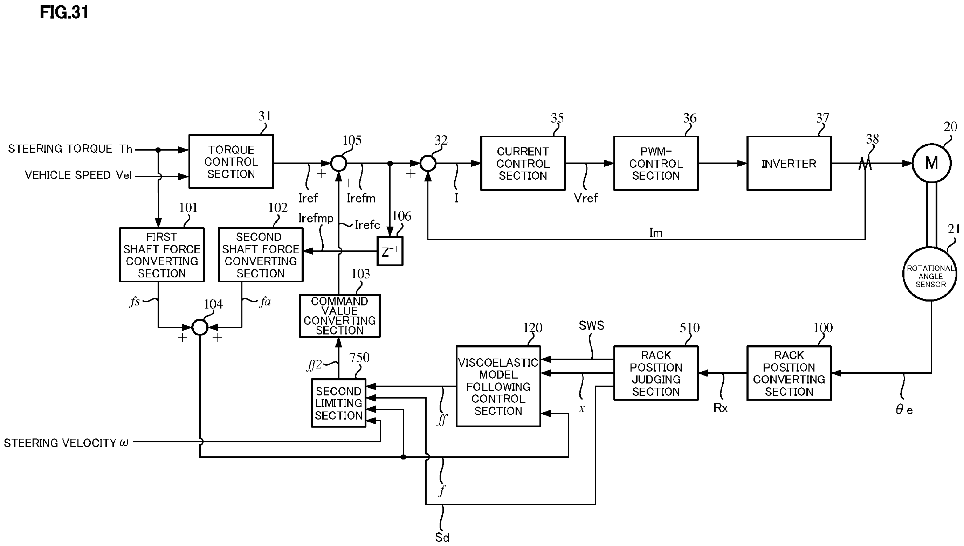

A configuration example of the ninth embodiment is shown in FIG. 31. Compared with the configuration example of the sixth embodiment shown in FIG. 25, the second limiting section 650 is exchanged for a second limiting section 750, and a steering velocity $\omega$ is inputted into the second limiting section 750 in addition to the virtual shaft force ff, the direction signal Sd and the rack shaft force f.

The second limiting section 750 sets the limit values by the setting method in the sixth embodiment in order to suppress the pulling-tendency strongly by easing the limitation of the virtual shaft force when the steering velocity is high, and sets the limit values by the setting method in the seventh embodiment in order to suppress the excessive reaction force by limiting the virtual shaft force strongly when the steering velocity is low. Further, in order to gradually change the setting method, the second limiting section 750 multiplies respective limit values set by the setting methods in the sixth embodiment and the seventh embodiment by gains, and sets the limit values to values obtained by adding them.

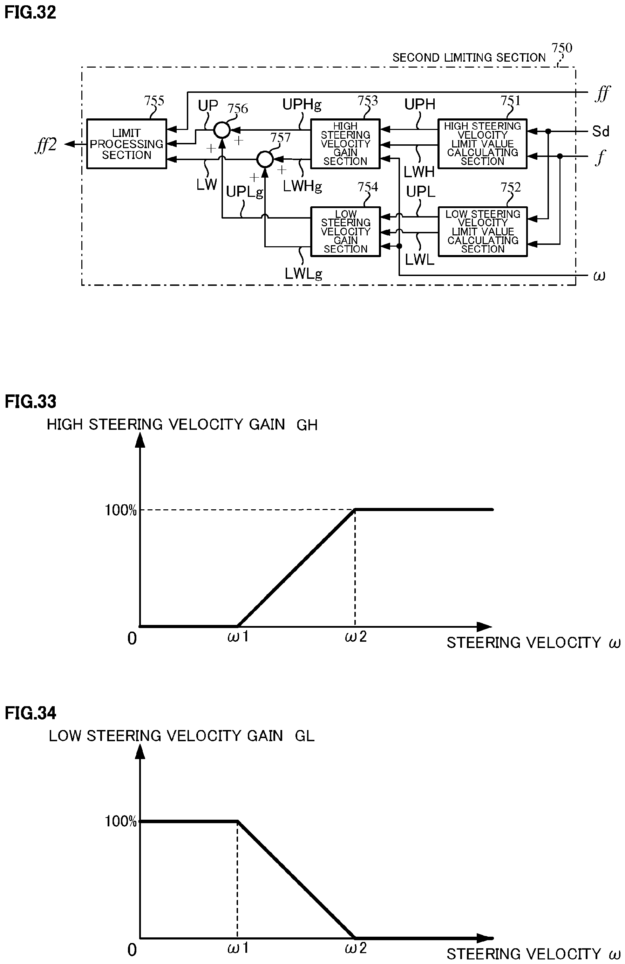

A configuration example of the second limiting section 750 is shown in FIG. 32. The second limiting section 750 comprises a high steering velocity limit value calculating section 751, a low steering velocity limit value calculating section 752, a high steering velocity gain section 753, a low steering velocity gain section 754, a limit processing section 755, and adding sections 756 and 757.

The high steering velocity limit value calculating section 751 calculates an upper limit UPH and a lower limit LWH in accordance with the setting method in the sixth embodiment by using the direction signal Sd and the rack shaft force f. That is, when the direction signal Sd is the "right turn", the high steering velocity limit value calculating section 751 sets the upper limit UPH to the right turn upper limit RU2 (= f + Fx3) calculated by the expression 35, and sets the lower limit LWH to the right turn lower limit RL2 (= -f - Fx4) calculated by the expression 36. When the direction signal Sd is the "left turn", the high steering velocity limit value calculating section 751 sets the upper limit UPH to the left turn upper limit LU2 (= -f + Fx4) calculated by the expression 37, and sets the lower limit LWH to the left turn lower limit LL2 (= f - Fx3) calculated by the expression 38.

The low steering velocity limit value calculating section 752 calculates an upper limit UPL and a lower limit LWL in accordance with the setting method in the seventh embodiment by using the direction signal Sd and the rack shaft force f. That is, when the direction signal Sd is the "right turn", the low steering velocity limit value calculating section 752 sets the upper limit UPL to the right turn upper limit RU3 (= f + Fx5) calculated by the expression 39, sets the lower limit LWL to the right turn lower limit RL3 (= -f + Fx6) calculated by the expression 40, and sets the lower limit LWL to zero when the lower limit LWL exceeds zero. When the direction signal Sd is the "left turn", the low steering velocity limit value calculating section 752 sets the upper limit UPL to the left turn upper limit LU3 (= -f - Fx6) calculated by the expression 41, sets the lower limit LWL to the left turn lower limit LL3 (= f - Fx5) calculated by the expression 42, and sets the upper limit UPL to zero when the upper limit UPL is smaller than zero.

The high steering velocity gain section 753 calculates an upper limit UPHg and a lower limit LWHg by multiplying the upper limit UPH and the lower limit LWH respectively by a high steering velocity gain GH which has, for example, a characteristic to the steering velocity $\omega$ as shown in FIG. 33. The characteristic of the high steering velocity gain GH shown in FIG. 33 is a characteristic where the high steering velocity gain GH is 0% until the steering velocity $\omega$ becomes a predetermined steering velocity $\omega1$, increases in proportion to the steering velocity $\omega$ while the steering velocity $\omega$ is between predetermined steering velocities $\omega1$ and $\omega2$ ($\omega2 > \omega1$), and becomes 100% when the steering velocity $\omega$ exceeds the predetermined steering velocity $\omega2$.

The low steering velocity gain section 754 calculates an upper limit UPLg and a lower limit LWLg by multiplying the upper limit UPL and the lower limit LWL respectively by a low steering velocity gain GL which has, for example, a characteristic to the steering velocity ω as shown in FIG. 34. The characteristic of the low steering velocity gain GL shown in FIG. 34 is a characteristic reverse to the characteristic of the high steering velocity gain GH shown in FIG. 33.

The adding section 756 calculates an upper limit UP by adding the upper limits UPHg and UPLg. The adding section 757 calculates a lower limit LW by adding the lower limits LWHg and LWLg.

The limiting section 755 limits the virtual shaft force ff by using the upper limit UP and the lower limit LW.

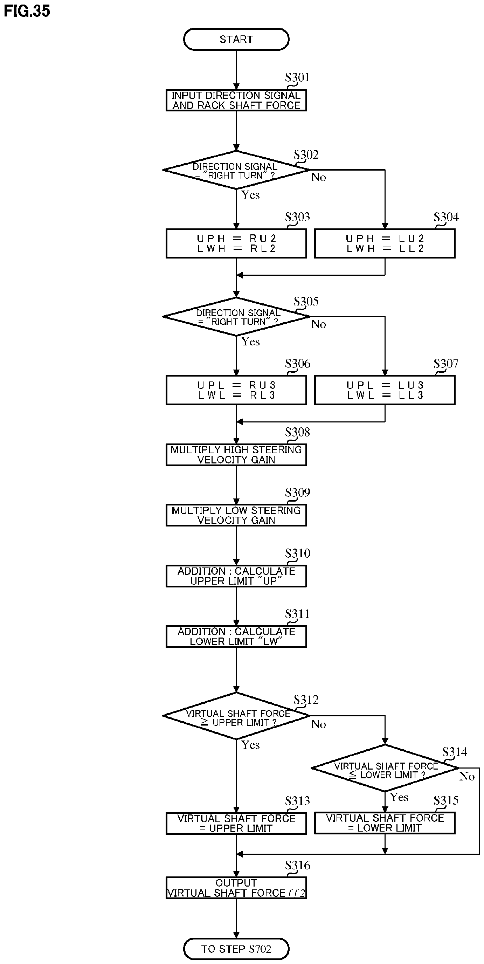

In such a configuration, an operating example of the ninth embodiment will be described with reference to a flowchart shown in FIG. 35.

FIG. 35 is a flowchart of an operating example of the second limiting section 750. With respect to the operation of the ninth embodiment, the operation of the second limiting section 750 is only different from the operations of the fifth to eighth embodiments, and other operations are the same as those of them.

The direction signal Sd outputted from the rack position judging section 510 and the rack shaft force f outputted from the adding section 104 are inputted into the high steering velocity limit value calculating section 751 and the low steering velocity limit value calculating section 752 (Step S301).

When the direction signal Sd is the "right turn" (Step S302), the high steering velocity limit value calculating section 751 sets the upper limit UPH to the right turn upper limit RU2, sets the lower limit LWH to the right turn lower limit RL2, and outputs them (Step S303). When the direction signal Sd is the "left turn" (Step S302), the high steering velocity limit value calculating section 751 sets the upper limit UPH to the left turn upper limit LU2, sets the lower limit LWH to the left turn lower limit LL2, and outputs them (Step S304).

When the direction signal Sd is the "right turn" (Step S305), the low steering velocity limit value calculating section 752 sets the upper limit UPL to the right turn upper limit RU3, sets the lower limit LWL to the right turn lower limit RL3, and outputs them (Step S306). When the direction signal Sd is the "left turn" (Step S305), the low steering velocity limit value calculating section 752 sets the upper limit UPL to the left turn upper limit LU3, sets the lower limit LWL to the left turn lower limit LL3, and outputs them (Step S307) . The order of the operation of the high steering velocity limit value calculating section 751 and the operation of the low steering velocity limit value calculating section 752 may be reverse, or both operations may be performed in parallel.

The high steering velocity gain section 753 inputs the upper limit UPH, the lower limit LWH and the steering velocity ω, obtains the high steering velocity gain GH corresponding to the steering velocity ω by using the characteristic shown in FIG. 33, multiplies the upper limit UPH and the lower limit LWH respectively by the high steering velocity gain GH, and outputs the upper limit UPHg (= UPH × GH) and the lower limit LWHg (= LWH × GH) (Step S308).

The low steering velocity gain section 754 inputs the upper limit UPL, the lower limit LWL and the steering velocity ω, obtains the low steering velocity gain GL corresponding to the steering velocity ω by using the characteristic shown in FIG. 34, multiplies the upper limit UPL and the lower limit LWL respectively by the low steering velocity gain GL, and outputs the upper limit UPLg (= UPL × GL) and the lower limit LWLg (= LWL × GL) (Step S309). The order of the operation of the high steering velocity gain section 753 and the operation of the low steering velocity gain section 754 may be reverse, or both operations may be performed in parallel.

The upper limits UPHg and UPLg are inputted into the adding section 756, and the addition result is outputted as the upper limit UP (Step S310) . The lower limits LWHg and LWLg are inputted into the adding section 757, and the addition result is outputted as the lower limit LW (Step S311).

The upper limit UP and the lower limit LW are inputted into the limit processing section 755 with the virtual shaft force ff outputted from the viscoelastic model following control section 120. The limit processing section 755 sets a value of the virtual shaft force ff to the upper limit UP (Step S313) when the virtual shaft force ff is larger than or equal to the upper limit UP (Step S312), and sets the value of the virtual shaft force ff to the lower limit LW (Step S315) when the virtual shaft force ff is smaller than or equal to the lower limit LW (Step S314) . Otherwise, the limit processing section 755 does not change the value of the virtual shaft force ff. The limited virtual shaft force ff is outputted as the virtual shaft force ff2 (Step S316).

Moreover, the characteristics of the high steering velocity gain GH and the low steering velocity gain GL between the steering velocities ω1 and ω2 are not limited to the linear characteristics as shown in FIGs. 33 and 34, and may be curved characteristics if the sum of the high steering velocity gain GH and the low steering velocity gain GL becomes 100%. Further, the high steering velocity limit value calculating section 751 and/or the low steering velocity limit value calculating section 752 may set the limit values by the setting methods in the fifth embodiment.

A tenth embodiment of the present invention will be described.

The ninth embodiment changes the limit values in accordance with the steering velocity, while the tenth embodiment changes the limit values in accordance with the vehicle speed. For example, the tenth embodiment suppresses the pulling-tendency strongly by easing the limitation of the virtual shaft force in the case of extremely low speed traveling including a stop, and gradually changes the limit values as a vehicle travels at a higher speed than a low speed.

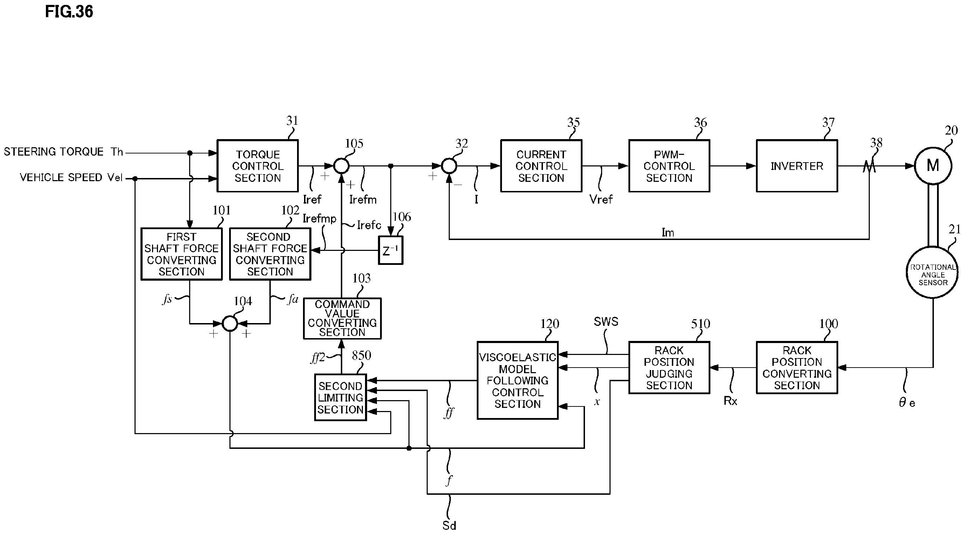

A configuration example of the tenth embodiment is shown in FIG. 36. Compared with the configuration example of the ninth embodiment shown in FIG. 31, the second limiting section 750 is exchanged for a second limiting section 850, and the vehicle speed Vel is inputted into the second limiting section 850 instead of the steering velocity ω.

The second limiting section 850 sets the limit values by the setting method in the sixth embodiment in order to suppress the pulling-tendency strongly by easing the limitation of the virtual shaft force when the vehicle speed is low, and sets the limit values by the setting method in the seventh embodiment when the vehicle speed becomes high. As with the ninth embodiment, in order to gradually change the settingmethod, the second limiting section 850 multiplies respective limit values set by the setting methods in the sixth embodiment and the seventh embodiment by gains, and sets the limit values to values obtained by adding them.

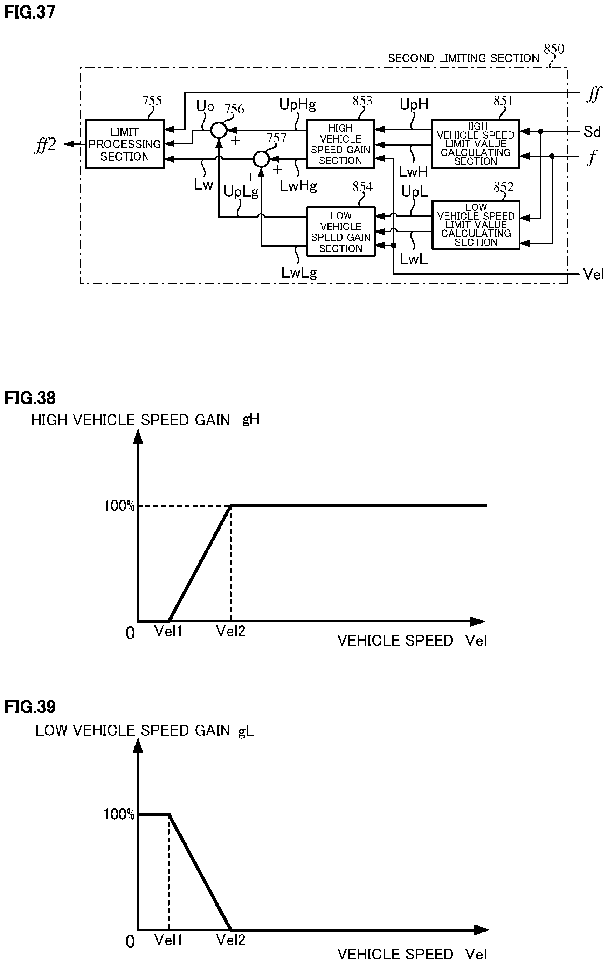

A configuration example of the second limiting section 850 is shown in FIG. 37. The second limiting section 850 comprises a high vehicle speed limit value calculating section 851, a low vehicle speed limit value calculating section 852, a high vehicle speed gain section 853, a low vehicle speed gain section 854, the limit processing section 755, and the adding sections 756 and 757. The limit processing section 755 and the adding sections 756 and 757 have the same configurations and perform the same operations as those of the ninth embodiment, so that the explanation is omitted.

The high vehicle speed limit value calculating section 851 calculates an upper limit UpH and a lower limit LwH in accordance with the setting method in the seventh embodiment by using the direction signal Sd and the rack shaft force f as with the low steering velocity limit value calculating section 752 in the ninth embodiment.

The low vehicle speed limit value calculating section 852 calculates an upper limit UpL and a lower limit LwL in accordance with the setting method in the sixth embodiment by using the direction signal Sd and the rack shaft force f as with the high steering velocity limit value calculating section 751 in the ninth embodiment.

The high vehicle speed gain section 853 calculates an upper limit UpHg and a lower limit LwHg by multiplying the upper limit UpH and the lower limit LwH respectively by a high vehicle speed gain gH which has, for example, a characteristic to the vehicle speed Vel as shown in FIG. 38. The characteristic of the high vehicle speed gain gH shown in FIG. 38 is a characteristic where the high vehicle speed gain gH is 0% until the vehicle speed Vel becomes a predetermined vehicle speedVel1, increases in proportion to the vehicle speed Vel while the vehicle speed Vel is between predetermined vehicle speeds Vel1 and Vel2 (Vel2 > Vel1), and becomes 100% when the vehicle speed Vel exceeds the predetermined vehicle speed Vel2.

The low vehicle speed gain section 854 calculates an upper limit UpLg and a lower limit LwLg by multiplying the upper limit UpL and the lower limit LwL respectively by a low vehicle speed gain gL which has, for example, a characteristic to the vehicle speed Vel as shown in FIG. 39. The characteristic of the low vehicle speed gain gL shown in FIG. 39 is a characteristic reverse to the characteristic of the high vehicle speed gain gH shown in FIG. 38.

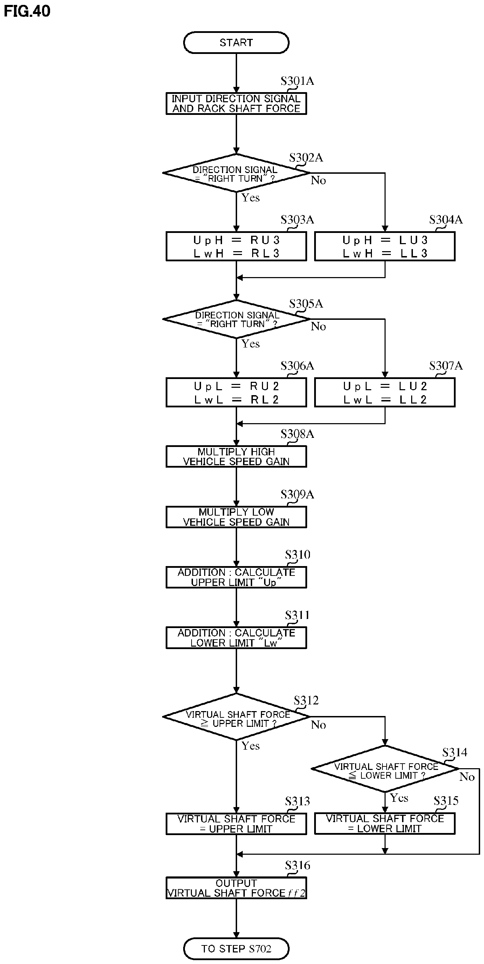

In such a configuration, an operating example of the tenth embodiment will be described with reference to a flowchart shown in FIG. 40.

FIG. 40 is a flowchart of an operating example of the second limiting section 850. With respect to the operation of the tenth embodiment, the operation of the second limiting section 850 is only different from the operation of the ninth embodiment, and other operations are the same as those of it.

The direction signal Sd and the rack shaft force f are inputted into the high vehicle speed limit value calculating section 851 and the low vehicle speed limit value calculating section 852 (Step S301A).

When the direction signal Sd is the "right turn" (Step S302A), the high vehicle speed limit value calculating section 851 sets the upper limit UpH to the right turn upper limit RU3, sets the lower limit LwH to the right turn lower limit RL3, and outputs them (Step S303A). When the direction signal Sd is the "left turn" (Step S302A), the high vehicle speed limit value calculating section 851 sets the upper limit UpH to the left turn upper limit LU3, sets the lower limit LwH to the left turn lower limit LL3, and outputs them (Step S304A).

When the direction signal Sd is the "right turn" (Step S305A), the low vehicle speed limit value calculating section 852 sets the upper limit UpL to the right turn upper limit RU2, sets the lower limit LwL to the right turn lower limit RL2, and outputs them (Step S306A) . When the direction signal Sd is the "left turn" (Step S305A), the low vehicle speed limit value calculating section 852 sets the upper limit UpL to the left turn upper limit LU2, sets the lower limit LwL to the left turn lower limit LL2, and outputs them (Step S307A). The order of the operation of the high vehicle speed limit value calculating section 851 and the operation of the low vehicle speed limit value calculating section 852 may be reverse, or both operations may be performed in parallel.

The high vehicle speed gain section 853 inputs the upper limit UpH, the lower limit LwH and the vehicle speed Vel, obtains the high vehicle speed gain gH corresponding to the vehicle speed Vel by using the characteristic shown in FIG. 38, multiplies the upper limit UpH and the lower limit LwH respectively by the high vehicle speed gain gH, and outputs the upper limit UpHg (= UpH × gH) and the lower limit LwHg (= LwH × gH) (Step S308A).

The low vehicle speed gain section 854 inputs the upper limit UpL, the lower limit LwL and the vehicle speed Vel, obtains the low vehicle speed gain gL corresponding to the vehicle speed Vel by using the characteristic shown in FIG. 39, multiplies the upper limit UpL and the lower limit LwL respectively by the low vehicle speed gain gL, and outputs the upper limit UpLg (= UpL × gL) and the lower limit LwLg (= LwL × gL) (Step S309A). The order of the operation of the high vehicle speed gain section 853 and the operation of the low vehicle speed gain section 854 may be reverse, or both operations may be performed in parallel.

After that, as with the operations in the ninth embodiment, the upper limit Up and the lower limit Lw are calculated from the upper limits UpHg and UpLg and the lower limits LwHg and LwLg through the adding sections 756 and 757 (Steps S310 and S311), the virtual shaft force ff2 is calculated from the upper limit Up, the lower limit Lw and the virtual shaft force ff through the limit processing section 755, and is outputted (Steps S312 to S316).

Moreover, the characteristics of the high vehicle speed gain gH and the low vehicle speed gain gL between the vehicle speeds Vel1 and Vel2 are not limited to the linear characteristics as shown in FIGs. 38 and 39, and may be curved characteristics if the sum of the high vehicle speed gain gH and the low vehicle speed gain gL becomes 100%. Further, the high vehicle speed limit value calculating section 851 and/or the low vehicle speed limit value calculating section 852 may set the limit values by the setting methods in the fifth embodiment.

An eleventh embodiment of the present invention will be described.

The above embodiments calculate the rack shaft force by the steering torque and the compensation current command value. However, such as an inertial force and a frictional force operating on mechanical sections (reduction gears, a rack-and-pinion mechanism, and so on) of the steering system can be a resistance force against steering of a steering wheel, and when using the rack shaft force as a force corresponding to a road surface reaction force, such a resistance force is necessary to consider in order to calculate the rack shaft force more accurately. Therefore, the eleventh embodiment subtracts the inertial force and the frictional force operating on the mechanical sections in addition of the steering shaft force and the assist shaft force which are calculated by the steering torque and the compensation current command value.

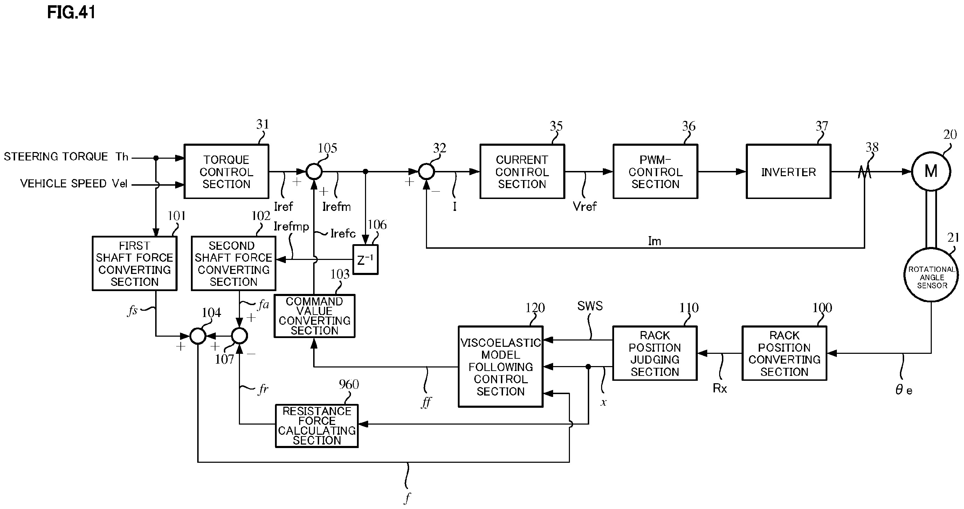

A configuration example of the eleventh embodiment is shown in FIG. 41. Compared with the configuration example of the first embodiment shown in FIG. 3, a resistance force calculating section 960 is added. The resistance force calculating section 960 inputs the rack displacement x outputted from the rack position judging section 110, and outputs a resistance force fr. The resistance force fr is subtracted from the assist shaft force fa outputted from the second shaft force converting section 102 at a subtracting section 107. Other configuration elements are the same as those of the first embodiment, so that the explanation is omitted.

The resistance force calculating section 960 calculates an inertial force pi and a frictional force pf on the basis of the rack displacement x, and outputs the addition result of them as the resistance force fr. The inertial force pi and the frictional force pf are calculated as follows.

A driver steers a steering wheel, so that the steering torque Th occurs, and the motor generates an assist torque Tm depending on the steering torque Th. As a result, wheels are turned, and a road surface reaction force Tr occurs. The steering torque Th and the assist torque Tm become the steering shaft force fs and the assist shaft force fa respectively on the rack shaft. On the other hand, a resistance force caused by an inertia J and a friction (a dynamic friction) Fr also occurs, so that a motion equation as the following expression 47 is obtained from balance of these forces.

[Expression 47]

$$J \cdot \alpha_r + Fr \cdot sign(v_r) + Tr = fs + fa$$

Here, αr is a rack acceleration, and vr is a rack velocity. The following expression 48 is obtained by performing Laplace transform with respect to the above expression 47 with an initial value equal to zero and solving the transformation result for the road surface reaction force Tr.

[Expression 48]

$$Tr = fs(s) + fa(s) - J \cdot \alpha_r(s) - Fr \cdot sign(v_r(s))$$

As can be seen from the above expression 48, when the resistance force operating on the mechanical sections cannot be neglected, it is necessary to subtract the inertial force pi caused by the inertia J and the frictional force pf caused by the dynamic friction Fr from the additional value of the steering shaft force fs and the assist shaft force fa in order to substitute the rack shaft force f for the road surface reaction force Tr, and the inertial force pi and the frictional force pf are calculated respectively by the following expressions 49 and 50.

[Expression 49]

$$pi = J \cdot \alpha_r$$

[Expression 50]

$$pf = Fr \cdot sign(v_r)$$

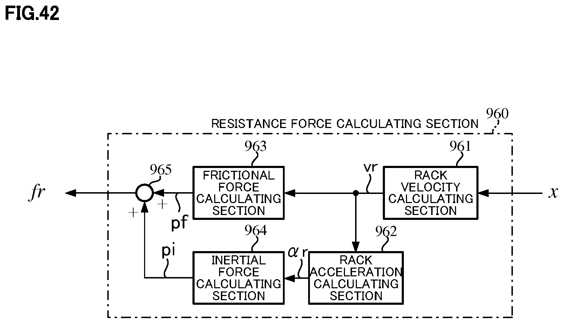

A configuration example of the resistance force calculating section 960 is shown in FIG. 42. The resistance force calculating section 960 comprises a rack velocity calculating section 961, a rack acceleration calculating section 962, a frictional force calculating section 963, an inertial force calculating section 964 and an adding section 965. The rack velocity calculating section 961 calculates the rack velocity vr by differentiating the rack displacement x. The rack acceleration calculating section 962 calculates the rack acceleration $\alpha$r by differentiating the rack velocity vr. The frictional force calculating section 963 obtains the dynamic friction Fr as a constant in advance, and calculates the frictional force pf by the expression 50 using the rack velocity vr. The inertial force calculating section 964 obtains the inertia J as a constant in advance, and calculates the inertial force pi by the expression 49 using the rack acceleration $\alpha$r. The frictional force pf and the inertial force pi are added at the adding section 965, and the addition result is outputted as the resistance force fr.

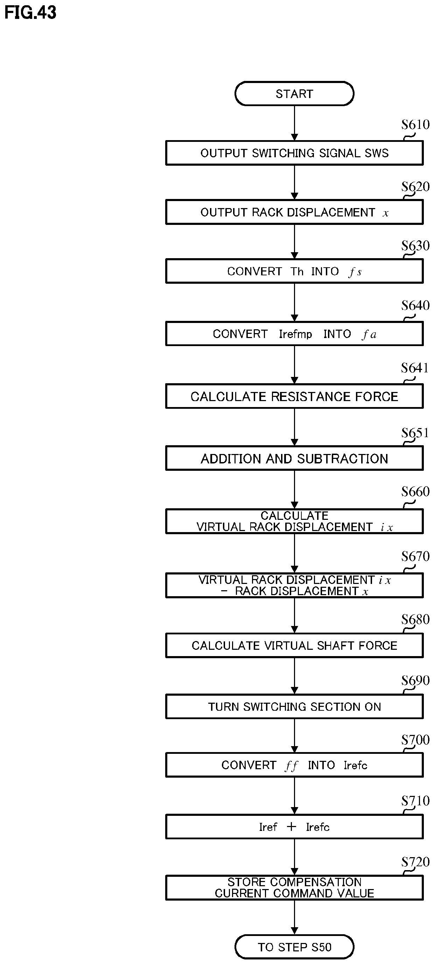

An operating example of the eleventh embodiment is shown in FIG. 43. Compared with the operating example of the first embodiment, in the operating example of the eleventh embodiment, an operation of the viscoelastic model following control is different, and in the operation of the viscoelastic model following control, an operation of the resistance force calculating section 960 and a subtraction of the resistance force fr are only added. Other operations are the same as the operating example of the first embodiment.

The rack displacement x outputted from the rack position judging section 110 in the step S620 is subtraction-inputted into the subtracting section 132 of the viscoelastic model following control section 120, and is also inputted into the resistance force calculating section 960. The resistance force calculating section 960 performs calculation of the resistance force on the basis of the rack displacement x (Step S641), and outputs the resistance force fr. The resistance force fr is subtraction-inputted into the subtracting section 107. The assist shaft force fa obtained by the conversion at the second shaft force converting section 102 is addition-inputted into the subtracting section 107, the resistance force fr is subtracted from the assist shaft force fa, the steering shaft force fs is added to the subtraction result at the adding section 104, and the addition result is outputted as the rack shaft force f (Step S651).

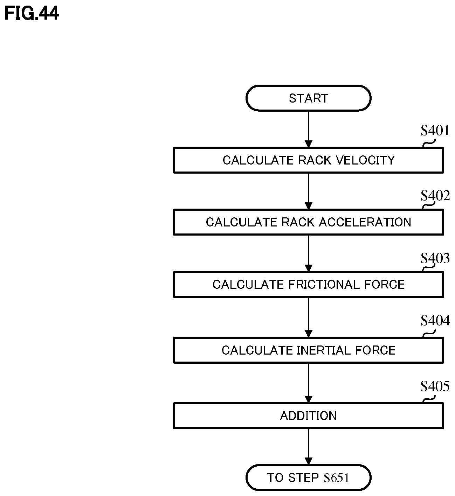

An operating example of the resistance force calculating section 960 is shown in FIG. 44. The rack displacement x is inputted into the rack velocity calculating section 961. The rack velocity calculating section 961 calculates the rack velocity vr by the rack displacement x (Step S401), and outputs it to the rack acceleration calculating section 962 and the frictional force calculating section 963. The rack acceleration calculating section 962 calculates the rack acceleration $\alpha$r by the rack velocity vr (Step S402), and outputs it to the inertial force calculating section 964. The frictional force calculating section 963 calculates the frictional force pf by the expression 50 using the rack velocity vr (Step S403), and outputs it to the adding section 965. The inertial force calculating section 964 calculates the inertial force pi by the expression 49 using the rack acceleration $\alpha$r (Step S404), and outputs it to the adding section 965. The frictional force pf and the inertial force pi are added at the adding section 965 (Step S405), and the addition result is outputted as the resistance force fr.

Moreover, the subtraction of the resistance force fr may be performed not to the assist shaft force fa but to the steering shaft force fs, or may be performed after addition of the steering shaft force fs and the assist shaft force fa. Further, the rack velocity vr may be calculated by the judgment rack position Rx outputted from the rack position converting section 100.

A twelfth embodiment of the present invention will be described.

The model parameters (the spring constant $k_0$ and the viscous friction coefficient $\mu$) are preset in the above embodiments, while they are variable on the basis of the rack displacement in the present embodiment. For example, the model parameters are set small in the vicinity of the first rack position (the rack displacement x = 0) where the virtual reaction force begins to occur so that the virtual reaction force rises smoothly, and as the rack displacement is increased, the model parameters are gradually increased so that the viscoelastic model simulates the reference vehicle characteristic by which the pulling-tendency does not occur.

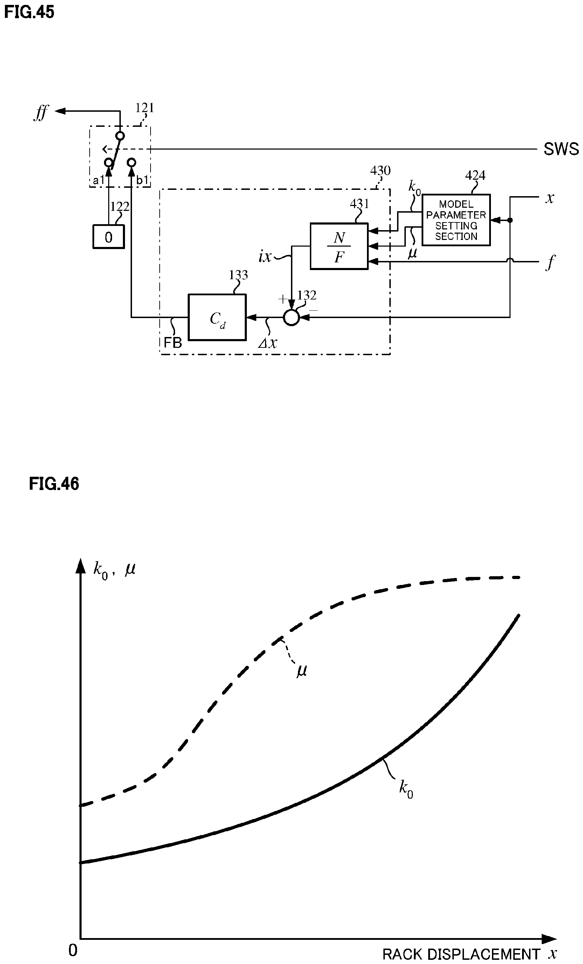

FIG. 45 shows a detailed configuration example of a viscoelastic model following control section in the twelfth embodiment. Compared with the configuration example of the viscoelastic model following control section in the first embodiment shown in FIG. 8, a model parameter setting section 424 is added, and the feedback element (N/F) 131 is exchanged for a feedback element (N/F) 431. Other configuration elements are the same as those of the first embodiment, so that the explanation is omitted.

The model parameter setting section 424 outputs the spring constant $k_0$ and the viscous friction coefficient $\mu$ which have characteristics to the rack displacement x, for example, as shown in FIG. 46. The feedback element (N/F) 431 inputs the spring constant $k_0$ and the viscous friction coefficient $\mu$, and uses them to convert the rack shaft force f into the virtual rack displacement ix in accordance with the expression 21.

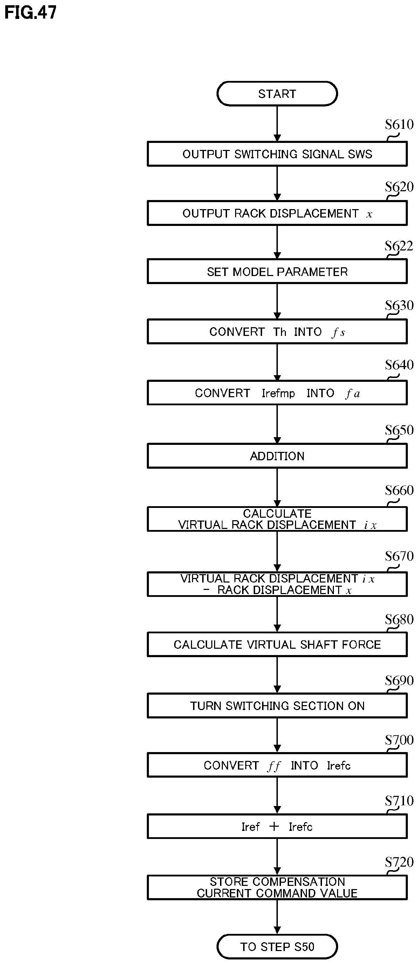

In such a configuration, an operating example of the twelfth embodiment will be described with reference to a flowchart shown in FIG. 47. Compared with the operating example of the first embodiment, in the operating example of the twelfth embodiment, an operation of the viscoelastic model following control is different, and in the operation of the viscoelastic model following control, an operation of the model parameter setting section 424 is only added. An operating example of the viscoelastic model following control is shown in FIG. 47. Compared with the operating example of the first embodiment shown in FIG. 11, the step S622 is added. Other operations are the same as those of the first embodiment.

In the step S622, the model parameter setting section 424 inputs the rack displacement x outputted from the rack position judging section 110, and sets the spring constant $k_0$ and the viscous friction coefficient $\mu$ which are obtained in accordance with the characteristics shown in FIG. 46 depending on the rack displacement x to the feedback element (N/F) 431. The feedback element (N/F) 431 converts the rack shaft force f into the virtual rack displacement ix in accordance with the expression 21 by using the set model parameters in the step S660.

Moreover, the characteristics of the spring constant $k_0$ and the viscous friction coefficient $\mu$ are not limited to the characteristics changing as shown in FIG. 46, and may be characteristics changing linearly and so on. Further, the twelfth embodiment is possible to combine with the control parameter setting section 223 of the second embodiment or the control parameter setting section 323 of the third embodiment, and to make both control parameters and model parameters variable.

A thirteenth embodiment of the present invention will be described.

The present embodiment stores the rack shaft force at a time point (hereinafter referred to a "control start time point") when the judgment rack position exceeds the first rack position, that is, at a rack position where a pulling-tendency characteristic begins to occur (a rack position where the virtual reaction force is necessary to begin to occur), as an initial rack shaft force (an initial shaft force), and uses a difference between the rack shaft force and the initial rack shaft force as the rack shaft force after the control start time point. Thus, an output of the reference model (the feedback element (N/F)) at the control start time point becomes zero, an output of the control element section also becomes zero, so that a difference between the compensation current command values in steering in the vicinity of the first rack position disappears, and it is possible to facilitate steering holding.

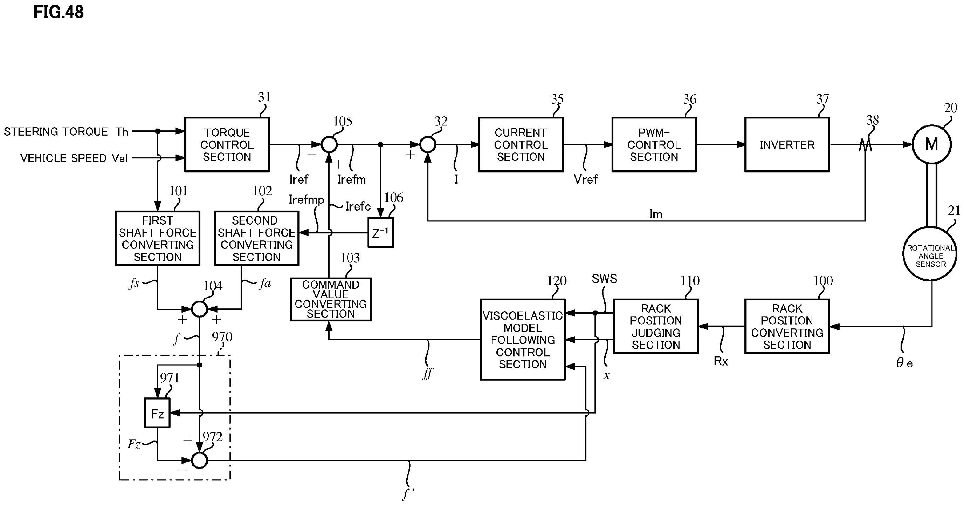

A configuration example of the thirteenth embodiment is shown in FIG. 48. Compared with the configuration example of the first embodiment shown in FIG. 3, a shaft force calculating section 970 is added. The shaft force calculating section 970 inputs the rack shaft force f outputted from the adding section 104 and the switching signal SWS outputted from the rack position judging section 110, and outputs a rack shaft force f'. Other configuration elements are the same as those of the first embodiment, so that the explanation is omitted.

The shaft force calculating section 970 comprises a setting storing section 971 and a subtracting section 972. The setting storing section 971 stores the rack shaft force f at the control start time point. That is, when the judgment rack position Rx exceeds the first rack position and the rack position judging section 110 outputs the switching signal SWS, the setting storing section 971 inputs the switching signal SWS, judges that the control start time point comes by the input of the switching signal SWS, and stores the rack shaft force inputted at that moment as an initial rack shaft force Fz. Therefore, the initial rack shaft force Fz stored in the setting storing section 971 is updated only at the control start time point. The subtracting section 972 calculates and outputs the rack shaft force f' by subtracting the initial rack shaft force Fz stored in the setting storing section 971 from the rack shaft force f.

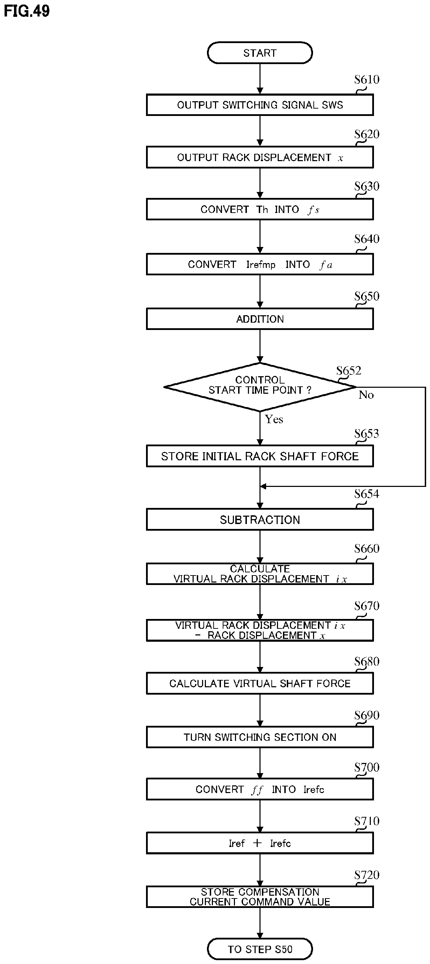

An operating example of the thirteenth embodiment is shown in FIG. 49. Compared with the operating example of the first embodiment, in the operating example of the thirteenth embodiment, an operation of the viscoelastic model following control is different, and in the operation of the viscoelastic model following control, an operation of the shaft force calculating section 970 is only added. Other operations are the same as the operating example of the first embodiment.

The switching signal SWS outputted from the rack position judging section 110 in the step S610 is inputted into the viscoelastic model following control section 120, and is also inputted into the setting storing section 971 of the shaft force calculating section 970. In the case that the switching signal SWS is a signal outputted at the control start time point (Step S652), the setting storing section 971 stores the rack shaft force f outputted from the adding section 104 in the step S650 as the initial rack shaft force Fz (Step S653). In the case that the switching signal SWS is not the signal outputted at the control start time point (Step S652), the initial rack shaft force Fz stored in the setting storing section 971 remains as it is. The rack shaft force f outputted from the adding section 104 is inputted also into the subtracting section 972. The subtracting section 972 subtracts the initial rack shaft force Fz stored in the setting storing section 971 from the rack shaft force f (Step S654), and outputs the rack shaft force f' . The rack shaft force f' is inputted into the viscoelastic model following control section 120.

Moreover, it is possible to adjust the control parameters (the proportional gain kp and the differential gain kd) set at the control parameter setting section 223 in the second embodiment and the model parameters (the spring constant $k_0$ and the viscous friction coefficient $\mu$) set at the model parameter setting section 424 in the twelfth embodiment by using the initial rack shaft force Fz stored in the setting storing section 971. The rack shaft force in a control range changes in accordance with a road surface state (asphalt, a wet road surface, on ice, on snow, or the like) . When a road surface friction coefficient is small (for example, on ice or on snow), the rack shaft force is small. The road surface friction coefficient is large on the asphalt, and the rack shaft force is large. Therefore, in the case of adjusting characteristics of the control parameters and the model parameters so as to make them appropriate on the asphalt, there is a possibility that they are not appropriate on ice, on snow, or the like, so that it is possible to improve that by adjusting the above difference of the rack shaft force using the initial rack shaft force Fz.

Though the control element section has the configuration of the PD control in the above embodiments (the first to the thirteenth embodiments), it may has a configuration of a proportional-integral-differential (PID) control or a PI control. In the case of the configuration of the PID control, the transfer function is represented by the following expression 51, the proportional gain kp, the differential gain kd and an integral gain ki become the control parameters, and the integral gain ki is set so as to have a characteristic similar to those of the proportional gain kp and the differential gain kd in the second and the third embodiments.

[Expression 51]

$$C_d = kp + kd \cdot s + \frac{ki}{s}$$

In the case of the configuration of the PI control, the transfer function becomes the following expression 52.

[Expression 52]

$$C_d = kp + \frac{ki}{s}$$

Further, it is possible to use the following expression 53 using a differential time Td instead of the differential gain kd as the transfer function of the control element section in the PD control.

[Expression 53]

$$C_d = kp(1 + Td \cdot s)$$

In this case, the proportional gain kp and the differential time Td become the control parameters. Similarly, it is possible to use an integral time Ti instead of the integral gain ki in the PID control or the PI control.

Though the above embodiments calculate the rack shaft force by the steering torque and the compensation current command value, it is possible to provide a sensor for detecting the rack shaft force and acquire the rack shaft force from the sensor.

Explanation of Reference Numerals

| | |
|---|---|
| 1 | steering wheel |
| 2 | column shaft (steering shaft, handle shaft) |
| 3 | reduction gears |
| 10 | torque sensor |
| 12 | vehicle speed sensor |
| 13 | battery |
| 14 | steering angle sensor |
| 20 | motor |
| 21 | rotational angle sensor |
| 30 | control unit (ECU) |
| 31 | torque control section |
| 35 | current control section |
| 36 | PWM-control section |
| 100 | rack position converting section |

| 101 | first shaft force converting section |
|---|---|
| 102 | second shaft force converting section |
| 103 | command value converting section |
| 106, 442 | storing section |
| 110, 510 | rack position judging section |
| 120 | viscoelastic model following control section |
| 121 | switching section |
| 130, 230, 330, 430 | feedback control section |
| 223, 323 | control parameter setting section |
| 424 | model parameter setting section |
| 440 | first limiting section |
| 441 | judgment limiting section |
| 550, 650, 750, 850 | second limiting section |
| 751 | high steering velocity limit value calculating section |
| 752 | low steering velocity limit value calculating section |
| 753 | high steering velocity gain section |
| 754 | low steering velocity gain section |
| 755 | limit processing section |
| 851 | high vehicle speed limit value calculating section |
| 852 | low vehicle speed limit value calculating section |
| 853 | high vehicle speed gain section |
| 854 | low vehicle speed gain section |
| 960 | resistance force calculating section |
| 961 | rack velocity calculating section |
| 962 | rack acceleration calculating section |
| 963 | frictional force calculating section |
| 964 | inertial force calculating section |
| 970 | shaft force calculating section |
| 971 | setting storing section |

**Claims**

1. A control unit of an electric power steering apparatus that assists and controls a steering system by driving a motor based on a current command value, **characterized in that** said control unit comprises:

   a configuration of a model following control setting a viscoelastic model for a rack displacement as a reference model; and
   said control unit performs a feedback control that inputs a shaft force which is obtained by adding a steering shaft force obtained by converting a steering torque and an assist shaft force obtained based on said current command value and said rack displacement, and generates a virtual reaction force, by said configuration of said model following control.

2. A control unit of an electric power steering apparatus that assists and controls a steering system by driving a motor based on a current command value, **characterized in that** said control unit comprises:

   a first shaft force converting section (101) that converts a steering torque into a steering shaft force;
   a second shaft force converting section (102) that converts a compensation current command value into an assist shaft force;
   a rack position converting section (100) that converts a rotational angle of said motor into a judgment rack position;
   a rack position judging section (110) that judges that said judgment rack position exceeds a predetermined first rack position, and outputs a rack displacement and a switching signal;
   a viscoelastic model following control section (120) that generates a virtual shaft force by setting a viscoelastic model as a reference model based on a shaft force which is obtained by adding said steering shaft force and said assist shaft force, said rack displacement and said switching signal; and
   a command value converting section (103) that converts said virtual shaft force into a control command value;
   said viscoelastic model following control section (120) comprises a feedback control section (130) that outputs said virtual shaft force in accordance with a feedback control based on said shaft force and said rack displacement, and a switching section (121) that switches an output of said virtual shaft force in accordance with said switching signal; and
said control unit performs said assist and control in accordance with said compensation current command value which is calculated by adding said control command value to said current command value.

3. The control unit of the electric power steering apparatus according to claim 2,
wherein said control unit further comprises a resistance force calculating section (960) that obtains a resistance force which operates on a mechanical section of said electric power steering apparatus; and
wherein said control unit obtains said shaft force by subtracting said resistance force in adding said steering shaft force and said assist shaft force.

4. The control unit of the electric power steering apparatus according to claim 2 or 3,
wherein said control unit changes a control parameter of said feedback control section (130) in accordance with said rack displacement or a virtual rack displacement.

5. The control unit of the electric power steering apparatus according to claim 4,
wherein said control parameter is set small where said rack displacement or said virtual rack displacement is small, and said control parameter is increased as said rack displacement or said virtual rack displacement is increased.

6. The control unit of the electric power steering apparatus according to any one of claims 2 to 5,
wherein said control unit further comprises a first limiting section (440) that limits said virtual shaft force when said rack displacement exceeds a predetermined second rack position which is larger than said first rack position and smaller than a rack end position.

7. The control unit of the electric power steering apparatus according to any one of claims 2 to 6,
wherein said control unit further comprises a second limiting section (550) that sets an upper limit and a lower limit on said virtual shaft force and limits said virtual shaft force.

8. The control unit of the electric power steering apparatus according to claim 7,
wherein said upper limit and said lower limit are set depending on a steering direction.

9. The control unit of the electric power steering apparatus according to claim 7 or 8,
wherein said upper limit and said lower limit are set based on said shaft force.

10. The control unit of the electric power steering apparatus according to any one of claims 7 to 9,
wherein said upper limit and said lower limit are changed in accordance with a steering velocity.

11. The control unit of the electric power steering apparatus according to any one of claims 7 to 9,
wherein said upper limit and said lower limit are changed in accordance with a vehicle speed.

12. The control unit of the electric power steering apparatus according to any one of claims 2 to 11,
wherein said control unit changes a model parameter of said feedback control section (130) in accordance with said rack displacement.

13. The control unit of the electric power steering apparatus according to any one of claims 2 to 12,
wherein said control unit stores said shaft force at a time point when said judgment rack position exceeds said first rack position as an initial shaft force, and uses a difference between said shaft force and said initial shaft force as said shaft force after said time point.

**Patentansprüche**

1. Steuervorrichtung für eine elektrische Servolenkvorrichtung, welche einem Lenksystem assistiert und dieses steuert durch Antreiben eines Motors basierend auf einem Strombefehlswert, **dadurch gekennzeichnet, dass** die Steuervorrichtung umfasst:

eine Konfiguration von einem Modell, welches einer Steuerung folgt, welche ein viscoelastisches Modell für einen Zahnstangenhub als ein Referenzmodell einstellt; und

wobei die Steuereinheit eine Feedback-Steuerung durchführt, welche eine Wellenkraft eingibt, welche erhalten wird durch Addieren einer Lenkwellenkraft, welche durch Umwandeln eines Lenkdrehmoments erhalten wird und einer Assistenzwellenkraft, welche erhalten wird basierend auf dem Strombefehlswert und dem Zahnstangenhub, und welche eine virtuelle Reaktionskraft erzeugt durch die Konfiguration von dem Model, welches der Steuerung folgt.

2. Steuervorrichtung von einer Servolenkvorrichtung, welche einem Lenksystem assistiert und dieses steuert durch Antreiben eines Motors basierend auf einem Strombefehlswert, **dadurch gekennzeichnet, dass** die Steuervorrichtung umfasst:

einen erste-Wellenkraft-Umwandlungsabschnitt (101), welcher ein Lenkdrehmoment in eine Lenkwellenkraft umwandelt;
einen zweite-Wellenkraft-Umwandlungsabschnitt (102), welcher einen Kompensationsstrom-Befehlswert in eine Assistenzwellenkraft umwandelt;
einen Zahnstangenposition-Umwandlungsabschnitt (100), welcher einen Drehwinkel von dem Motor in eine Beurteilungs-Zahnstangenposition umwandelt;
einen Zahnstangenposition-Beurteilungsabschnitt (110), welcher beurteilt, dass die Beurteilungs-Zahnstangenposition eine vorbestimmte erste Zahnstangenposition überschreitet, und einen Zahnstangenversatz und ein Schaltsignal ausgibt;
ein viscoelastisches Modell, welches dem Steuerabschnitt (120) folgt, welches eine virtuelle Wellenkraft erzeugt durch Einstellen eines viscoelastischen Modells als ein Referenzmodell basierend auf einer Wellenkraft, welche erhalten wird durch Addieren der Lenkwellenkraft und der Assistenzwellenkraft, des Zahnstangenversatzes und des Schaltsignals; und
einen Befehlswert-Umwandlungsabschnitt (103), welcher die virtuelle Wellenkraft in einen Steuer-Befehlswert umwandelt;
wobei das viscoelastische Modell dem Steuerabschnitt (120) folgt, welcher einen Feedback-Steuerabschnitt (130), welcher die virtuelle Wellenkraft in Übereinstimmung mit einer Feedback-Steuerung ausgibt, basierend auf der Wellenkraft und des Zahnstangenversatzes, und ein Schaltabschnitt (121) umfasst, welcher einen Ausgang von der virtuellen Wellenkraft in Übereinstimmung mit dem Schaltsignal schaltet; und
wobei die Steuervorrichtung die Assistenz und Steuerung in Übereinstimmung mit dem Kompensationsstrom-Befehlswert durchführt, welcher berechnet wird durch Addieren des Steuerbefehlswerts und des Strombefehlswerts.

3. Steuervorrichtung von einer Servolenkvorrichtung gemäß Anspruch 2, wobei die Steuervorrichtung weiterhin einen Widerstandskraft-Berechnungsabschnitt (960) umfasst, welcher eine Widerstandskraft erhält, welche auf einem mechanischen Abschnitt von der Servolenkvorrichtung arbeitet; und
wobei die Steuervorrichtung die Wellenkraft erhält durch Subtrahieren der Widerstandskraft im Addieren der Lenkwellenkraft und Assistenzwellenkraft.

4. Steuervorrichtung von einer Servolenkvorrichtung gemäß Anspruch 2 oder 3,
wobei die Steuervorrichtung einen Steuerparameter von dem Feedback-Steuerabschnitt (130) in Übereinstimmung mit dem Zahnstangenversatz oder dem virtuellen Zahnstangenversatz ändert.

5. Steuervorrichtung von einer Servolenkvorrichtung gemäß Anspruch 4, wobei der Steuerparameter klein eingestellt wird, wo der Zahnstangenversatz oder der virtuelle Zahnstangenversatz klein ist, und wobei der Steuerparameter erhöht wird, wenn der Zahnstangenversatz oder der virtuelle Zahnstangenversatz erhöht wird.

6. Steuervorrichtung von einer Servolenkvorrichtung gemäß irgend einem der Ansprüche 2 -5,
wobei die Steuervorrichtung weiterhin einen ersten Begrenzungsabschnitt (440) umfasst, welcher die virtuelle Wellenkraft begrenzt, wenn der Zahnstangenversatz eine vorbestimmte zweite Zahnstangenposition überschreitet, welche größer ist als die erste Zahnstangenposition und kleiner ist als eine Zahnstangen-Endposition.

7. Steuervorrichtung von einer Servolenkvorrichtung gemäß irgendeinem der Ansprüche 2 - 6,
wobei die Steuervorrichtung weiterhin einen zweiten Begrenzungsabschnitt (550) umfasst, welcher eine obere Grenze und eine untere Grenze für die virtuelle Wellenkraft einstellt, und welcher die virtuelle Wellenkraft begrenzt.

8. Steuervorrichtung von einer Servolenkvorrichtung gemäß Anspruch 7, wobei die obere Grenze und die untere Grenze in Abhängigkeit von einer Lenkrichtung eingestellt werden.

**9.** Steuervorrichtung für eine Servolenkvorrichtung gemäß Anspruch 7 oder 8,
wobei die obere Grenze und die untere Grenze basierend auf einer Wellenkraft eingestellt werden.

**10.** Steuervorrichtung von einer Servolenkvorrichtung gemäß irgendeinem der Ansprüche 7 - 9, wobei die obere Grenze und die untere Grenze in Übereinstimmung mit der Lenkgeschwindigkeit geändert werden.

**11.** Steuervorrichtung von einer Servolenkvorrichtung gemäß irgendeinem der Ansprüche 7 - 9, wobei die obere Grenze und die untere Grenze in Übereinstimmung mit einer Fahrzeuggeschwindigkeit geändert werden.

**12.** Steuervorrichtung von einer Servolenkvorrichtung gemäß irgendeinem der Ansprüche 2 - 11, wobei die Steuervorrichtung einen Modellparameter von dem Feedback-Steuerabschnitt (130) in Übereinstimmung mit dem Zahnstangenversatz ändert.

**13.** Steuervorrichtung von einer Servolenkvorrichtung gemäß irgend einem der Ansprüche 2 - 12, wobei die Steuervorrichtung die Wellenkraft zu einem Zeitpunkt als eine Initialwellenkraft speichert, wenn die Beurteilung-Zahnstangenposition die erste Zahnstangenposition überschreitet, und eine Differenz zwischen der Wellenkraft und der Initialwellenkraft als die Wellenkraft nach dem Zeitpunkt verwendet.

**Revendications**

**1.** Unité de commande d'un appareil de direction à assistance électrique qui assiste et commande un système de direction en entraînant un moteur sur la base d'une valeur d'ordre de courant, **caractérisée en ce que** ladite unité de commande comprend :

une configuration d'une commande de suivi de modèle réglant un modèle viscoélastique pour un déplacement de crémaillère en tant que modèle de référence ; et
ladite unité de commande réalise une commande de rétroaction qui entre une force d'arbre qui est obtenue en additionnant une force d'arbre de direction obtenue en convertissant un couple de direction et une force d'arbre d'assistance obtenue sur la base de ladite valeur d'ordre de courant et dudit déplacement de crémaillère, et génère une force de réaction virtuelle, par ladite configuration de ladite commande de suivi de modèle.

**2.** Unité de commande d'un appareil de direction à assistance électrique qui assiste et commande un système de direction en entraînant un moteur sur la base d'une valeur d'ordre de courant, **caractérisée en ce que** ladite unité de commande comprend :

une première section de conversion de force d'arbre (101) qui convertit un couple de direction en une force d'arbre de direction ;
une seconde section de conversion de force d'arbre (102) qui convertit une valeur d'ordre de courant de compensation en une force d'arbre d'assistance ;
une section de conversion de position de crémaillère (100) qui convertit un angle de rotation dudit moteur en une position de crémaillère d'estimation ;
une section d'estimation de position de crémaillère (110) qui estime que ladite position de crémaillère d'estimation dépasse une première position de crémaillère prédéterminée, et fournit en sortie un déplacement de crémaillère et un signal de commutation ;
une section de commande de suivi de modèle viscoélastique (120) qui génère une force d'arbre virtuelle en réglant un modèle viscoélastique en tant que modèle de référence sur la base d'une force d'arbre qui est obtenue en additionnant ladite force d'arbre de direction et ladite force d'arbre d'assistance, ledit déplacement de crémaillère ledit signal de commutation ; et
une section de conversion de valeur d'ordre (103) qui convertit ladite force d'arbre virtuelle en une valeur d'ordre de commande ;
ladite section de commande de suivi de modèle viscoélastique (120) comprend une section de commande de rétroaction (130) qui fournit en sortie ladite force d'arbre virtuelle selon une commande de rétroaction sur la base de ladite force d'arbre et dudit déplacement de crémaillère, et une section de commutation (121) qui commute une sortie de ladite force d'arbre virtuelle selon ledit signal de commutation ; et
ladite unité de commande réalise ladite assistance et ladite commande selon ladite valeur d'ordre de courant de compensation qui est calculée en additionnant ladite valeur d'ordre de commande à ladite valeur d'ordre de courant.

**3.** Unité de commande de l'appareil de direction à assistance électrique selon la revendication 2,
dans laquelle ladite unité de commande comprend en outre une section de calcul de force de résistance (960) qui obtient une force de résistance qui fonctionne sur une section mécanique dudit appareil de direction à assistance électrique ; et
dans laquelle ladite unité de commande obtient ladite force d'arbre en soustrayant ladite force de résistance dans l'addition de ladite force d'arbre de direction et de ladite force d'arbre d'assistance.

**4.** Unité de commande de l'appareil de direction à assistance électrique selon la revendication 2 ou 3,
dans laquelle ladite unité de commande change un paramètre de commande de ladite section de commande de rétroaction (130) selon ledit déplacement de crémaillère ou un déplacement de crémaillère virtuel.

**5.** Unité de commande de l'appareil de direction à assistance électrique selon la revendication 4,
dans laquelle ledit paramètre de commande est réglé petit là où ledit déplacement de crémaillère ou ledit déplacement de crémaillère virtuel est petit, et ledit paramètre de commande est augmenté à mesure que ledit déplacement de crémaillère ou ledit déplacement de crémaillère virtuel est augmenté.

**6.** Unité de commande de l'appareil de direction à assistance électrique selon l'une quelconque des revendications 2 à 5,
dans laquelle ladite unité de commande comprend en outre une première section de limitation (440) qui limite ladite force d'arbre virtuelle lorsque ledit déplacement de crémaillère dépasse une seconde position de crémaillère prédéterminée qui est plus grande que ladite première position de crémaillère et plus petite qu'une position d'extrémité de crémaillère.

**7.** Unité de commande de l'appareil de direction à assistance électrique selon l'une quelconque des revendications 2 à 6,
dans laquelle ladite unité de commande comprend en outre une seconde section de limitation (550) qui règle une limite supérieure et une limite inférieure sur ladite force d'arbre virtuelle et limite ladite force d'arbre virtuelle.

**8.** Unité de commande de l'appareil de direction à assistance électrique selon la revendication 7,
dans laquelle ladite limite supérieure et ladite limite inférieure sont réglées selon un sens de direction.

**9.** Unité de commande de l'appareil de direction à assistance électrique selon la revendication 7 ou 8,
dans laquelle ladite limite supérieure et ladite limite inférieure sont réglées sur la base de ladite force d'arbre.

**10.** Unité de commande de l'appareil de direction à assistance électrique selon l'une quelconque des revendications 7 à 9,
dans laquelle ladite limite supérieure et ladite limite inférieure sont changées selon une vitesse de direction.

**11.** Unité de commande de l'appareil de direction à assistance électrique selon l'une quelconque des revendications 7 à 9,
dans laquelle ladite limite supérieure et ladite limite inférieure sont changées selon une vitesse de véhicule.

**12.** Unité de commande de l'appareil de direction à assistance électrique selon l'une quelconque des revendications 2 à 11,
dans laquelle ladite unité de commande change un paramètre de modèle de ladite section de commande de rétroaction (130) selon ledit déplacement de crémaillère.

**13.** Unité de commande de l'appareil de direction à assistance électrique selon l'une quelconque des revendications 2 à 12,
dans laquelle ladite unité de commande stocke ladite force d'arbre à un instant où ladite position de crémaillère d'estimation dépasse ladite première position de crémaillère en tant que force d'arbre initiale, et utilise une différence entre ladite force d'arbre et ladite force d'arbre initiale en tant que dite force d'arbre après ledit instant.

**FIG.1**

**PRIOR ART**

**FIG.2**

STEERING TORQUE Th ——→ | TORQUE CONTROL SECTION | 31 ———→ Iref ———→ (+/−) 32 ———→ | CURRENT CONTROL SECTION | 35 ——→ Vref ——→ | PWM-CONTROL SECTION | 36 ——→ | INVERTER | 37 ——→ 38 ——→ (M) 20

VEHICLE SPEED Vel ——→

Im

ROTATIONAL ANGLE SENSOR 21

θe

**PRIOR ART**

EP 3 375 695 B1

**FIG.3**

**FIG.4**

**FIG.5**

**FIG.6**

**FIG.7**

**FIG.8**

**FIG.9A**

VIRTUAL RACK POSITION (y-axis)

WITHOUT PULLING-TENDENCY

WITH PULLING-TENDENCY

$x_0$

JUDGMENT RACK POSITION

0

**FIG.9B**

RACK REACTION FORCE (y-axis)

WITHOUT PULLING-TENDENCY
(FORWARD TRAVELING)

WITHOUT PULLING-TENDENCY
(BACKWARD TRAVELING)

WITH PULLING-TENDENCY
(FORWARD TRAVELING)

WITH PULLING-TENDENCY
(BACKWARD TRAVELING)

$x_0$

JUDGMENT RACK POSITION

0

FIG.10

START

CALCULATE
CURRENT COMMAND VALUE — S10

CONVERT RACK POSITION — S20

EXCEED
FIRST RACK POSITION ? — S30
Yes
No

NORMAL STEERING — S40

VISCOELASTIC MODEL
FOLLOWING CONTROL — S60

END ? — S50
No
Yes

END

**FIG.11**

```
                    ┌─────────────┐
                    │    START    │
                    └──────┬──────┘
                           │                        S610
                    ┌──────▼─────────────────────┐
                    │ OUTPUT SWITCHING SIGNAL SWS │
                    └──────┬─────────────────────┘
                           │                        S620
                    ┌──────▼─────────────────────┐
                    │ OUTPUT RACK DISPLACEMENT x  │
                    └──────┬─────────────────────┘
                           │                        S630
                    ┌──────▼─────────────────────┐
                    │   CONVERT Th INTO fs        │
                    └──────┬─────────────────────┘
                           │                        S640
                    ┌──────▼─────────────────────┐
                    │ CONVERT Irefmp INTO fa      │
                    └──────┬─────────────────────┘
                           │                        S650
                    ┌──────▼─────────────────────┐
                    │         ADDITION            │
                    └──────┬─────────────────────┘
                           │                        S660
                    ┌──────▼─────────────────────┐
                    │        CALCULATE            │
                    │ VIRTUAL RACK DISPLACEMENT ix│
                    └──────┬─────────────────────┘
                           │                        S670
                    ┌──────▼─────────────────────┐
                    │ VIRTUAL RACK DISPLACEMENT ix│
                    │ - RACK DISPLACEMENT x       │
                    └──────┬─────────────────────┘
                           │                        S680
                    ┌──────▼─────────────────────┐
                    │ CALCULATE VIRTUAL SHAFT FORCE│
                    └──────┬─────────────────────┘
                           │                        S690
                    ┌──────▼─────────────────────┐
                    │ TURN SWITCHING SECTION ON   │
                    └──────┬─────────────────────┘
                           │                        S700
                    ┌──────▼─────────────────────┐
                    │  CONVERT ff INTO Irefc      │
                    └──────┬─────────────────────┘
                           │                        S710
                    ┌──────▼─────────────────────┐
                    │      Iref + Irefc           │
                    └──────┬─────────────────────┘
                           │                        S720
                    ┌──────▼─────────────────────┐
                    │  STORE COMPENSATION         │
                    │  CURRENT COMMAND VALUE      │
                    └──────┬─────────────────────┘
                           │
                    ┌──────▼──────┐
                    │ TO STEP S50 │
                    └─────────────┘
```

**FIG.12**

**FIG.13**

**FIG.14**

```
                    ┌─────────────┐
                    │    START    │
                    └──────┬──────┘
                           │                    S610
                    ┌──────▼──────────────────┐
                    │ OUTPUT SWITCHING SIGNAL SWS │
                    └──────┬──────────────────┘
                           │                    S620
                    ┌──────▼──────────────────┐
                    │ OUTPUT RACK DISPLACEMENT x │
                    └──────┬──────────────────┘
                           │                    S621
                    ┌──────▼──────────────────┐
                    │   SET CONTROL PARAMETER  │
                    └──────┬──────────────────┘
                           │                    S630
                    ┌──────▼──────────────────┐
                    │   CONVERT  Th  INTO  fs  │
                    └──────┬──────────────────┘
                           │                    S640
                    ┌──────▼──────────────────┐
                    │ CONVERT  Irefmp  INTO  fa │
                    └──────┬──────────────────┘
                           │                    S650
                    ┌──────▼──────────────────┐
                    │         ADDITION         │
                    └──────┬──────────────────┘
                           │                    S660
                    ┌──────▼──────────────────┐
                    │        CALCULATE         │
                    │ VIRTUAL RACK DISPLACEMENT ix │
                    └──────┬──────────────────┘
                           │                    S670
                    ┌──────▼──────────────────┐
                    │ VIRTUAL RACK DISPLACEMENT ix │
                    │   -  RACK DISPLACEMENT x │
                    └──────┬──────────────────┘
                           │                    S680
                    ┌──────▼──────────────────┐
                    │ CALCULATE VIRTUAL SHAFT FORCE │
                    └──────┬──────────────────┘
                           │                    S690
                    ┌──────▼──────────────────┐
                    │ TURN SWITCHING SECTION ON │
                    └──────┬──────────────────┘
                           │                    S700
                    ┌──────▼──────────────────┐
                    │   CONVERT  ff  INTO  Irefc │
                    └──────┬──────────────────┘
                           │                    S710
                    ┌──────▼──────────────────┐
                    │      Iref  +  Irefc      │
                    └──────┬──────────────────┘
                           │                    S720
                    ┌──────▼──────────────────┐
                    │   STORE COMPENSATION     │
                    │ CURRENT COMMAND VALUE    │
                    └──────┬──────────────────┘
                           │
                    ┌──────▼──────┐
                    │ TO STEP S50 │
                    └─────────────┘
```

**FIG.15**

**FIG.16**

START

S610
OUTPUT SWITCHING SIGNAL SWS

S620
OUTPUT RACK DISPLACEMENT $x$

S630
CONVERT Th INTO $fs$

S640
CONVERT Irefmp INTO $fa$

S650
ADDITION

S660
CALCULATE
VIRTUAL RACK DISPLACEMENT $ix$

S661
SET CONTROL PARAMETER

S670
VIRTUAL RACK DISPLACEMENT $ix$
− RACK DISPLACEMENT $x$

S680
CALCULATE VIRTUAL SHAFT FORCE

S690
TURN SWITCHING SECTION ON

S700
CONVERT $ff$ INTO Irefc

S710
Iref ＋ Irefc

S720
STORE COMPENSATION
CURRENT COMMAND VALUE

TO STEP S50

42

**FIG.17**

- 20 — M (Motor)
- 21 — ROTATIONAL ANGLE SENSOR — $\theta e$
- 38 — Im
- 37 — INVERTER
- 36 — PWM-CONTROL SECTION
- 35 — CURRENT CONTROL SECTION — Vref
- 32 — I
- 31 — TORQUE CONTROL SECTION
- 101 — FIRST SHAFT FORCE CONVERTING SECTION — $fs$
- 102 — SECOND SHAFT FORCE CONVERTING SECTION — $fa$
- 104
- 103 — COMMAND VALUE CONVERTING SECTION — Irefmp
- 106 — $Z^{-1}$
- 105 — Irefm, Irefc
- Iref
- 100 — RACK POSITION CONVERTING SECTION — Rx
- 110 — RACK POSITION JUDGING SECTION — SWS, $x$
- 120 — VISCOELASTIC MODEL FOLLOWING CONTROL SECTION — $ff$
- 440 — FIRST LIMITING SECTION — $ff1$
- $f$
- STEERING TORQUE Th
- VEHICLE SPEED Vel

**FIG.18**

**FIG.19**

```
                    ┌─────────────────┐
                    │      START      │
                    └────────┬────────┘
                             │              S610
                    ┌────────▼────────────────┐
                    │ OUTPUT SWITCHING SIGNAL SWS │
                    └────────┬────────────────┘
                             │              S620
                    ┌────────▼────────────────┐
                    │ OUTPUT RACK DISPLACEMENT x │
                    └────────┬────────────────┘
                             │              S630
                    ┌────────▼────────────────┐
                    │  CONVERT  Th  INTO  fs   │
                    └────────┬────────────────┘
                             │              S640
                    ┌────────▼────────────────┐
                    │ CONVERT  Irefmp  INTO  fa │
                    └────────┬────────────────┘
                             │              S650
                    ┌────────▼────────────────┐
                    │        ADDITION          │
                    └────────┬────────────────┘
                             │              S660
                    ┌────────▼────────────────┐
                    │        CALCULATE         │
                    │ VIRTUAL RACK DISPLACEMENT ix │
                    └────────┬────────────────┘
                             │              S670
                    ┌────────▼────────────────┐
                    │ VIRTUAL RACK DISPLACEMENT ix │
                    │   − RACK DISPLACEMENT x  │
                    └────────┬────────────────┘
                             │              S680
                    ┌────────▼────────────────┐
                    │ CALCULATE VIRTUAL SHAFT FORCE │
                    └────────┬────────────────┘
                             │              S690
                    ┌────────▼────────────────┐
                    │ TURN SWITCHING SECTION ON │
                    └────────┬────────────────┘
                             │              S691
                    ┌────────▼────────────────┐
                    │  FIRST LIMIT PROCESSING  │
                    └────────┬────────────────┘
                             │              S701
                    ┌────────▼────────────────┐
                    │ CONVERT  ff1  INTO  Irefc │
                    └────────┬────────────────┘
                             │              S710
                    ┌────────▼────────────────┐
                    │     Iref  +  Irefc       │
                    └────────┬────────────────┘
                             │              S720
                    ┌────────▼────────────────┐
                    │   STORE COMPENSATION     │
                    │ CURRENT COMMAND VALUE    │
                    └────────┬────────────────┘
                             │
                    ┌────────▼────────┐
                    │  TO STEP S50    │
                    └─────────────────┘
```

**FIG.20**

```
                    ┌─────────────┐
                    │    START    │
                    └──────┬──────┘
                           │                      S810
              ┌────────────▼────────────────┐
              │  INPUT RACK DISPLACEMENT     │
              │  AND VIRTUAL SHAFT FORCE     │
              └────────────┬────────────────┘
                           │
                           │              S820
                      ╱────▼────╲
                   ╱   EXCEED      ╲
                ◄─ SECOND RACK POSITION ? ─────────────────┐
                   ╲              ╱       Yes              │
                      ╲────┬────╱                          │
                        No │                               │
              S830         │                     S840      │
  ┌───────────────────────▼──────┐    ┌──────────────────▼─────────────────────┐
  │ VIRTUAL SHAFT FORCE ff1      │    │ VIRTUAL SHAFT FORCE ff1                 │
  │ = VIRTUAL SHAFT FORCE ff     │    │ = PREVIOUS VIRTUAL SHAFT FORCE ffp      │
  └───────────────┬──────────────┘    └─────────────────┬──────────────────────┘
                  │◄────────────────────────────────────┘
                  │               S850
  ┌───────────────▼──────────────┐
  │     OUTPUT AND STORE         │
  │  VIRTUAL SHAFT FORCE ff1     │
  └───────────────┬──────────────┘
                  │
          ┌───────▼────────┐
          │  TO STEP S701  │
          └────────────────┘
```

FIG.21

EP 3 375 695 B1

**FIG.22**

```
        ┌─────────────┐
        │    START    │
        └──────┬──────┘
               │
               ▼                        S10
    ┌──────────────────────────┐
    │        CALCULATE         │
    │  CURRENT COMMAND VALUE   │
    └──────────────┬───────────┘
                   │                    S20
    ┌──────────────────────────┐
    │   CONVERT RACK POSITION  │
    └──────────────┬───────────┘
                   │                    S21
    ┌──────────────────────────┐
    │  OUTPUT DIRECTION SIGNAL │
    └──────────────┬───────────┘
                   │
                   ▼                    S30
              ╱─────────╲
             ╱  EXCEED   ╲        Yes
            ╱ FIRST RACK  ╲──────────┐
            ╲ POSITION ?  ╱          │
             ╲           ╱           │
              ╲─────────╱            │
                   │ No              │
                   ▼         S41     ▼               S61
    ┌──────────────────────┐   ┌──────────────────────────┐
    │   NORMAL STEERING    │   │   VISCOELASTIC MODEL     │
    │                      │   │  FOLLOWING CONTROL       │
    └──────────┬───────────┘   └──────────┬───────────────┘
               │◄───────────────────────────┘
               ▼                    S50
          ╱─────────╲         No
         ╱   END ?   ╲──────────────►
          ╲─────────╱
               │ Yes
               ▼
        ┌─────────────┐
        │     END     │
        └─────────────┘
```

**FIG.23**

```
                    ┌─────────────┐
                    │    START    │
                    └──────┬──────┘
                           │                    S610
                    ┌──────▼──────────────────┐
                    │ OUTPUT SWITCHING SIGNAL SWS │
                    └──────┬──────────────────┘
                           │                    S620
                    ┌──────▼──────────────────┐
                    │ OUTPUT RACK DISPLACEMENT x │
                    └──────┬──────────────────┘
                           │                    S630
                    ┌──────▼──────────────────┐
                    │  CONVERT  Th  INTO  fs   │
                    └──────┬──────────────────┘
                           │                    S640
                    ┌──────▼──────────────────┐
                    │ CONVERT  Irefmp  INTO  fa │
                    └──────┬──────────────────┘
                           │                    S650
                    ┌──────▼──────────────────┐
                    │        ADDITION          │
                    └──────┬──────────────────┘
                           │                    S660
                    ┌──────▼──────────────────┐
                    │       CALCULATE          │
                    │ VIRTUAL RACK DISPLACEMENT ix │
                    └──────┬──────────────────┘
                           │                    S670
                    ┌──────▼──────────────────┐
                    │ VIRTUAL RACK DISPLACEMENT ix │
                    │   − RACK DISPLACEMENT x   │
                    └──────┬──────────────────┘
                           │                    S680
                    ┌──────▼──────────────────┐
                    │ CALCULATE VIRTUAL SHAFT FORCE │
                    └──────┬──────────────────┘
                           │                    S690
                    ┌──────▼──────────────────┐
                    │ TURN SWITCHING SECTION ON │
                    └──────┬──────────────────┘
                           │                    S692
                    ┌──────▼──────────────────┐
                    │  SECOND LIMIT PROCESSING │
                    └──────┬──────────────────┘
                           │                    S702
                    ┌──────▼──────────────────┐
                    │  CONVERT  ff2  INTO  Irefc │
                    └──────┬──────────────────┘
                           │                    S710
                    ┌──────▼──────────────────┐
                    │      Iref  +  Irefc      │
                    └──────┬──────────────────┘
                           │                    S720
                    ┌──────▼──────────────────┐
                    │   STORE COMPENSATION     │
                    │ CURRENT COMMAND VALUE    │
                    └──────┬──────────────────┘
                           │
                    ┌──────▼──────┐
                    │ TO STEP S50 │
                    └─────────────┘
```

**FIG.24**

START

S910
INPUT DIRECTION SIGNAL

S920
DIRECTION SIGNAL = "RIGHT TURN" ?
No
Yes

S930
VIRTUAL SHAFT FORCE ≧ RIGHT TURN UPPER LIMIT ?
No
Yes

S950
VIRTUAL SHAFT FORCE ≦ RIGHT TURN LOWER LIMIT ?
No
Yes

S970
VIRTUAL SHAFT FORCE ≧ LEFT TURN UPPER LIMIT ?
No
Yes

S990
VIRTUAL SHAFT FORCE ≦ LEFT TURN LOWER LIMIT ?
No
Yes

S940
VIRTUAL SHAFT FORCE = RIGHT TURN UPPER LIMIT

S960
VIRTUAL SHAFT FORCE = RIGHT TURN LOWER LIMIT

S980
VIRTUAL SHAFT FORCE = LEFT TURN UPPER LIMIT

S1000
VIRTUAL SHAFT FORCE = LEFT TURN LOWER LIMIT

S1010
OUTPUT VIRTUAL SHAFT FORCE $ff2$

TO STEP S702

FIG.25

STEERING TORQUE Th
VEHICLE SPEED Vel

31 TORQUE CONTROL SECTION
101 FIRST SHAFT FORCE CONVERTING SECTION — $fs$
102 SECOND SHAFT FORCE CONVERTING SECTION — $fa$
104
103 COMMAND VALUE CONVERTING SECTION
105
106 $Z^{-1}$
Iref, Irefmp, Irefm, Irefc
32
35 CURRENT CONTROL SECTION — I
36 PWM-CONTROL SECTION — Vref
37 INVERTER
38 Im
20 M
21 ROTATIONAL ANGLE SENSOR — $\theta e$
100 RACK POSITION CONVERTING SECTION — Rx
510 RACK POSITION JUDGING SECTION
SWS, $x$
120 VISCOELASTIC MODEL FOLLOWING CONTROL SECTION — $ff$
650 SECOND LIMITING SECTION — $ff2$, $f$, Sd

**FIG.26**

**FIG.27**

**FIG.28**

**FIG.29**

RACK SHAFT FORCE

RIGHT TURN
UPPER LIMIT

LEFT TURN
UPPER LIMIT

RACK SHAFT FORCE $f$

Fx5

0

STEERING ANGLE

RIGHT TURN
LOWER LIMIT

Fx6

LEFT TURN
LOWER LIMIT

INVERSION OF
RACK SHAFT FORCE $f$

**FIG.30**

RACK SHAFT FORCE

LEFT TURN
UPPER LIMIT

RIGHT TURN
UPPER LIMIT

RACK SHAFT FORCE $f$

Fx1

0

STEERING ANGLE

INVERSION OF
RACK SHAFT FORCE $f$

Fx4

LEFT TURN
LOWER LIMIT

RIGHT TURN
LOWER LIMIT

**FIG.31**

**FIG.32**

**FIG.33**

HIGH STEERING VELOCITY GAIN  GH

**FIG.34**

LOW STEERING VELOCITY GAIN  GL

**FIG.35**

FIG.36

**FIG.37**

SECOND LIMITING SECTION 850

*ff*

LIMIT PROCESSING SECTION 755

*ff2*

756

Up

UpHg

HIGH VEHICLE SPEED GAIN SECTION 853

UpH

HIGH VEHICLE SPEED LIMIT VALUE CALCULATING SECTION 851

Sd

*f*

757

Lw

UpLg

LwHg

LwH

LOW VEHICLE SPEED GAIN SECTION 854

UpL

LOW VEHICLE SPEED LIMIT VALUE CALCULATING SECTION 852

LwLg

LwL

Vel

**FIG.38**

HIGH VEHICLE SPEED GAIN  gH

100%

0    Vel1    Vel2

VEHICLE SPEED  Vel

**FIG.39**

LOW VEHICLE SPEED GAIN  gL

100%

0    Vel1    Vel2

VEHICLE SPEED  Vel

**FIG.40**

```
                    ┌─────────────┐
                    │    START    │
                    └─────────────┘
                           │
                           ▼            S301A
              ┌──────────────────────────┐
              │ INPUT DIRECTION SIGNAL   │
              │ AND RACK SHAFT FORCE     │
              └──────────────────────────┘
                           │
                           ▼            S302A
                    ╱─────────────╲
                   ╱ DIRECTION SIGNAL╲    No
                   ╲ = "RIGHT TURN" ?╱─────────────────┐
                    ╲─────────────╱                    │
                        │ Yes                          │
           S303A        ▼                     S304A    ▼
      ┌──────────────────┐            ┌──────────────────┐
      │ U p H  =  R U 3  │            │ U p H  =  L U 3  │
      │ L w H  =  R L 3  │            │ L w H  =  L L 3  │
      └──────────────────┘            └──────────────────┘
                  │                            │
                  │◄───────────────────────────┘
                  ▼                    S305A
           ╱─────────────╲
          ╱ DIRECTION SIGNAL╲    No
          ╲ = "RIGHT TURN" ?╱─────────────────┐
           ╲─────────────╱                    │
               │ Yes                          │
  S306A        ▼                     S307A    ▼
 ┌──────────────────┐            ┌──────────────────┐
 │ U p L  =  R U 2  │            │ U p L  =  L U 2  │
 │ L w L  =  R L 2  │            │ L w L  =  L L 2  │
 └──────────────────┘            └──────────────────┘
           │                            │
           │◄───────────────────────────┘
           ▼                    S308A
  ┌──────────────────────┐
  │ MULTIPLY HIGH        │
  │ VEHICLE SPEED GAIN   │
  └──────────────────────┘
           │              S309A
           ▼
  ┌──────────────────────┐
  │ MULTIPLY LOW         │
  │ VEHICLE SPEED GAIN   │
  └──────────────────────┘
           │              S310
           ▼
  ┌──────────────────────┐
  │ ADDITION : CALCULATE │
  │ UPPER LIMIT "Up"     │
  └──────────────────────┘
           │              S311
           ▼
  ┌──────────────────────┐
  │ ADDITION : CALCULATE │
  │ LOWER LIMIT "Lw"     │
  └──────────────────────┘
           │
           ▼                    S312
    ╱─────────────╲
   ╱ VIRTUAL SHAFT FORCE╲   No
   ╲  ≧ UPPER LIMIT ?   ╱──────────────┐
    ╲─────────────╱                    │
        │ Yes                          ▼                S314
        │                       ╱─────────────╲
        │                      ╱ VIRTUAL SHAFT FORCE╲  No
        │                      ╲  ≦ LOWER LIMIT ?   ╱──────┐
        │                       ╲─────────────╱            │
        │              S313          │ Yes    S315         │
        ▼                            ▼                      │
 ┌──────────────────┐      ┌──────────────────┐           │
 │ VIRTUAL SHAFT FORCE│    │ VIRTUAL SHAFT FORCE│          │
 │ = UPPER LIMIT    │      │ = LOWER LIMIT    │           │
 └──────────────────┘      └──────────────────┘           │
        │                         │                        │
        │◄────────────────────────┴────────────────────────┘
        ▼              S316
 ┌──────────────────────┐
 │ OUTPUT               │
 │ VIRTUAL SHAFT FORCE ff2 │
 └──────────────────────┘
        │
        ▼
 ┌──────────────────┐
 │  TO STEP S702    │
 └──────────────────┘
```

# FIG.41

STEERING TORQUE Th

VEHICLE SPEED Vel

TORQUE CONTROL SECTION 31

Iref

FIRST SHAFT FORCE CONVERTING SECTION 101

SECOND SHAFT FORCE CONVERTING SECTION 102

Irefmp

Irefm

Irefc

COMMAND VALUE CONVERTING SECTION 103

Z⁻¹ 106

105

32

CURRENT CONTROL SECTION 35

PWM-CONTROL SECTION 36

INVERTER 37

38

M 20

Vref

I

Im

ROTATIONAL ANGLE SENSOR 21

fs

104

107

fa

fr

RESISTANCE FORCE CALCULATING SECTION 960

VISCOELASTIC MODEL FOLLOWING CONTROL SECTION 120

ff

SWS

x

RACK POSITION JUDGING SECTION 110

Rx

RACK POSITION CONVERTING SECTION 100

θ e

f

EP 3 375 695 B1

**FIG.42**

RESISTANCE FORCE CALCULATING SECTION $\underset{960}{}$

## FIG.43

```
                    ┌─────────────┐
                    │    START    │
                    └──────┬──────┘
                           │                    S610
                    ┌──────▼──────────────────┐
                    │ OUTPUT SWITCHING SIGNAL SWS │
                    └──────┬──────────────────┘
                           │                    S620
                    ┌──────▼──────────────────┐
                    │ OUTPUT RACK DISPLACEMENT x │
                    └──────┬──────────────────┘
                           │                    S630
                    ┌──────▼──────────────────┐
                    │   CONVERT  Th  INTO  fs  │
                    └──────┬──────────────────┘
                           │                    S640
                    ┌──────▼──────────────────┐
                    │ CONVERT Irefmp INTO fa   │
                    └──────┬──────────────────┘
                           │                    S641
                    ┌──────▼──────────────────┐
                    │ CALCULATE RESISTANCE FORCE │
                    └──────┬──────────────────┘
                           │                    S651
                    ┌──────▼──────────────────┐
                    │  ADDITION AND SUBTRACTION │
                    └──────┬──────────────────┘
                           │                    S660
                    ┌──────▼──────────────────┐
                    │        CALCULATE          │
                    │ VIRTUAL RACK DISPLACEMENT ix │
                    └──────┬──────────────────┘
                           │                    S670
                    ┌──────▼──────────────────┐
                    │ VIRTUAL RACK DISPLACEMENT ix │
                    │   - RACK DISPLACEMENT x   │
                    └──────┬──────────────────┘
                           │                    S680
                    ┌──────▼──────────────────┐
                    │ CALCULATE VIRTUAL SHAFT FORCE │
                    └──────┬──────────────────┘
                           │                    S690
                    ┌──────▼──────────────────┐
                    │ TURN SWITCHING SECTION ON │
                    └──────┬──────────────────┘
                           │                    S700
                    ┌──────▼──────────────────┐
                    │  CONVERT  ff  INTO  Irefc │
                    └──────┬──────────────────┘
                           │                    S710
                    ┌──────▼──────────────────┐
                    │      Iref  +  Irefc       │
                    └──────┬──────────────────┘
                           │                    S720
                    ┌──────▼──────────────────┐
                    │    STORE COMPENSATION     │
                    │ CURRENT COMMAND VALUE     │
                    └──────┬──────────────────┘
                           │
                    ┌──────▼──────┐
                    │ TO STEP S50 │
                    └─────────────┘
```

**FIG.44**

```
                    ┌─────────────────┐
                    │      START      │
                    └────────┬────────┘
                             │                    S401
                  ┌──────────▼───────────────┐
                  │  CALCULATE RACK VELOCITY  │
                  └──────────┬───────────────┘
                             │                    S402
                  ┌──────────▼────────────────────┐
                  │  CALCULATE RACK ACCELERATION   │
                  └──────────┬────────────────────┘
                             │                    S403
                  ┌──────────▼───────────────────┐
                  │  CALCULATE FRICTIONAL FORCE   │
                  └──────────┬───────────────────┘
                             │                    S404
                  ┌──────────▼─────────────────┐
                  │  CALCULATE INERTIAL FORCE   │
                  └──────────┬─────────────────┘
                             │                    S405
                  ┌──────────▼───────────────┐
                  │         ADDITION          │
                  └──────────┬───────────────┘
                             │
                    ┌────────▼────────┐
                    │  TO STEP S651   │
                    └─────────────────┘
```

**FIG.45**

**FIG.46**

**FIG.47**

START

↓ S610

OUTPUT SWITCHING SIGNAL SWS

↓ S620

OUTPUT RACK DISPLACEMENT $x$

↓ S622

SET MODEL PARAMETER

↓ S630

CONVERT Th INTO $fs$

↓ S640

CONVERT Irefmp INTO $fa$

↓ S650

ADDITION

↓ S660

CALCULATE
VIRTUAL RACK DISPLACEMENT $ix$

↓ S670

VIRTUAL RACK DISPLACEMENT $ix$
− RACK DISPLACEMENT $x$

↓ S680

CALCULATE VIRTUAL SHAFT FORCE

↓ S690

TURN SWITCHING SECTION ON

↓ S700

CONVERT $ff$ INTO Irefc

↓ S710

Iref + Irefc

↓ S720

STORE COMPENSATION
CURRENT COMMAND VALUE

↓

TO STEP S50

FIG.48

EP 3 375 695 B1

**FIG.49**

```
          ( START )
              │
              ▼                                    S610
  ┌────────────────────────────────┐
  │  OUTPUT SWITCHING SIGNAL SWS    │
  └────────────────────────────────┘
              │                                    S620
              ▼
  ┌────────────────────────────────┐
  │   OUTPUT RACK DISPLACEMENT x    │
  └────────────────────────────────┘
              │                                    S630
              ▼
  ┌────────────────────────────────┐
  │      CONVERT  Th  INTO  fs      │
  └────────────────────────────────┘
              │                                    S640
              ▼
  ┌────────────────────────────────┐
  │   CONVERT  Irefmp  INTO  fa     │
  └────────────────────────────────┘
              │                                    S650
              ▼
  ┌────────────────────────────────┐
  │           ADDITION              │
  └────────────────────────────────┘
              │
              ▼                                    S652
         ╱─────────────╲
        ╱   CONTROL      ╲      No
       ◄  START TIME POINT ?├──────────┐
        ╲               ╱              │
         ╲─────────────╱               │
              │ Yes                    │
              ▼              S653       │
  ┌────────────────────────────────┐   │
  │  STORE INITIAL RACK SHAFT FORCE│   │
  └────────────────────────────────┘   │
              │◄──────────────────────┘
              ▼                                    S654
  ┌────────────────────────────────┐
  │          SUBTRACTION            │
  └────────────────────────────────┘
              │                                    S660
              ▼
  ┌────────────────────────────────┐
  │          CALCULATE              │
  │  VIRTUAL RACK DISPLACEMENT ix   │
  └────────────────────────────────┘
              │                                    S670
              ▼
  ┌────────────────────────────────┐
  │  VIRTUAL RACK DISPLACEMENT ix   │
  │    - RACK DISPLACEMENT x        │
  └────────────────────────────────┘
              │                                    S680
              ▼
  ┌────────────────────────────────┐
  │  CALCULATE VIRTUAL SHAFT FORCE  │
  └────────────────────────────────┘
              │                                    S690
              ▼
  ┌────────────────────────────────┐
  │    TURN SWITCHING SECTION ON    │
  └────────────────────────────────┘
              │                                    S700
              ▼
  ┌────────────────────────────────┐
  │    CONVERT  ff  INTO  Irefc     │
  └────────────────────────────────┘
              │                                    S710
              ▼
  ┌────────────────────────────────┐
  │        Iref  +  Irefc           │
  └────────────────────────────────┘
              │                                    S720
              ▼
  ┌────────────────────────────────┐
  │     STORE COMPENSATION          │
  │   CURRENT COMMAND VALUE         │
  └────────────────────────────────┘
              │
              ▼
       ( TO STEP S50 )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4747958 B
- JP H6144262 A
- JP 4293734 B
- JP 4400544 B
- JP 4997472 B
- WO 2014195625 A2

**Non-patent literature cited in the description**

- Engineering Sciences & Technology. official journal of a scientific society. Kansai University, 2010, vol. 17
- **HAJIME MAEDA ; TOSHIHARU SUGIE.** System Control Theory for Advanced Control. Asakura Shoten